# EUROPÄISCHE PATENTSCHRIFT

(11) **EP 2 215 096 B1**
(45) Veröffentlichungstag und Bekanntmachung des Hinweises auf die Patenterteilung: **19.09.2012**
(21) Anmeldenummer: 08843041.8
(22) Anmeldetag: 27.10.2008
(51) Int. Cl.: C07F 1/08, C07F 5/02

(54) **KUPFER-SAUERSTOFF-ADDUKTKOMPLEXE**
COPPER-OXYGEN ADDUCT COMPLEXES
COMPLEXES ADDUITS CUIVRE-OXYGÈNE

(30) Priorität: 26.10.2007 DE 102007051694
(43) Veröffentlichungstag der Anmeldung: 11.08.2010
(73) Patentinhaber: Justus-Liebig-Universität Gießen, 35390 Giessen (DE)
(72) Erfinder: SCHINDLER, Siegfried, 35329 Giessen (DE); WÜRTELE, Christian, 35428 Langgöns (DE)
(74) Vertreter: Buchhold, Jürgen
(86) Internationale Anmeldenummer: PCT/DE2008/001741
(87) Internationale Veröffentlichungsnummer: WO 2009/052809

(56) Entgegenhaltungen:
- K KOMIYAMA ET AL.: "Dioxygen Reactivity of Copper(I) Complexes with Tetradentate Tripodal Ligands Having Aliphatic Nitrogen Donors: Synthesis, Structures, and Properties of Peroxo and Superoxo Complexes" BULL CHEM SOC JPN, Bd. 77, 2004, Seiten 59-72, XP002515284 in der Anmeldung erwähnt
- KATO, CHIKA NOZAKI ET AL: "Oxidation catalysis of microporous metal carboxylate complexes" COMPTES RENDUS CHIMIE , 10(4-5), 284-294 CODEN: CRCOCR; ISSN: 1631-0748, 27. Dezember 2006 (2006-12-27), XP002515285 -& DATABASE CA [Online] CHEMICAL ABSTRACTS SERVICE, COLUMBUS, OHIO, US; KATO, CHIKA NOZAKI ET AL: "Oxidation catalysis of microporous metal carboxylate complexes" XP002515286 gefunden im STN Database accession no. 2007:625984

## Beschreibung

Die vorliegende Erfindung beschreibt neuartige Kupfer-(III)-Sauerstoff-Adduktkomplexe des allgemeinen Typs [L-Cu-O-O-Cu-L](BAr₄)₂ sowie Verfahren zu deren Herstellung. Dabei ist L ein tetradentater tripodaler Ligand, dessen vier Bindungsstellen durch Stickstoffatome repräsentiert werden. BAr4- ist ein Tetraarylboratanion. Die erfindungsgemäßen Komplexe sind im Gegensatz zu bisher bekannten Cu-(II)-Sauerstoff-Adduktkomplexen bei Raumtemperatur stabil. Die erfindungsgemäßen Cu-(II)-Sauerstoff-Adduktkomplexe können als Oxidationskatalysatoren verwendet werden.

### Beschreibung und Einleitung des allgemeinen Gebietes der Erfindung

Die vorliegende Erfindung betrifft die Gebiete anorganische Chemie/Komplexchemie, organische Chemie und Redoxchemie.

### Stand der Technik

Oxidationsreaktionen spielen in der technischen Chemie eine große Rolle. Beispielhaft seien die Oxidation von Benzol zu Phenol und die Oxidation von Methan zu Methanol genannt.
In vielen Fällen kann Luftsauerstoff nicht direkt eingesetzt werden, und geeignete Oxidationsmittel müssen erst hergestellt werden.
Seit einiger Zeit wird vermutet, dass Kupfer-Sauerstoff-Adduktkomplexe geeignete Oxidationsmittel bzw. Katalysatoren für zahlreiche großtechnische Oxidationen darstellen könnten, beispielsweise für die Oxidation von Wasserstoff, aromatischen und aliphatischen Kohlenwasserstoffen sowie von Alkoholen und Aminen. Bei vielen der bisher bekannten Kupfer-Sauerstoff-Adduktkomplexen wird das Kupferatom durch tripodale tetradentate stickstoffhaltige Liganden koordiniert. Häufig verwendete Liganden sind beispielsweise

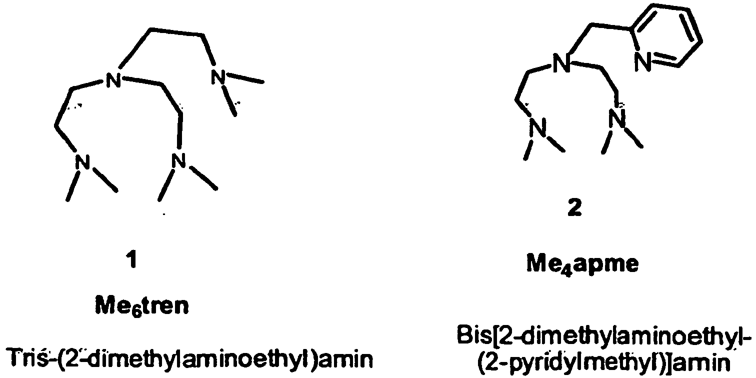

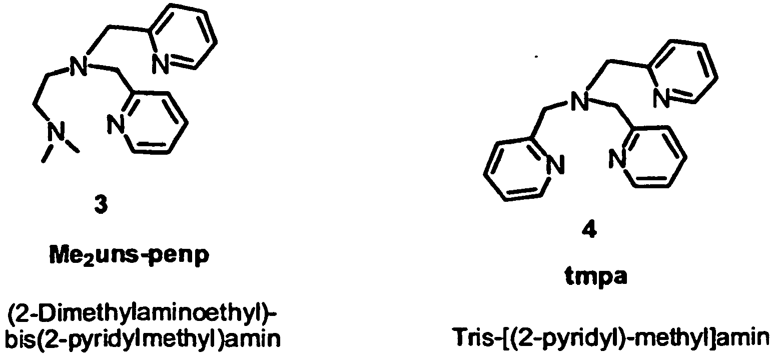

Die genannten Kupfer-Sauerstoff-Adduktkomplexe, die tetradentaten, tripodalen stickstoffhaltigen Liganden sowie entsprechende Komplexe des zweiwertigen Eisens sind beispielsweise beschrieben in
1. RJ Jacobson et al.: "A Cu2-O2 Complex. Crystal Structure and Characterization of a Reversible Dioxygen Binding System." J Am Chem Soc 1988, 110, 3690-3692
2. M Becker et al.: "Reversible Binding of Dioxygen by a Copper(I) Complex with Tris(2-dimethylaminoethyl)amine (Me6tren) as a Ligand." Chem Eur J 1999, 5, 3124-3128
3. S Schindler: "Reactivity of Copper(I) Complexes Towards Dioxygen". Eur J Inorg Chem 2000, 2311-2326
4. M Weitzer et al.: "Low temperature stopped-flow studies in inorganic chemistry." J Chem Soc, Dalton Trans, 2002, 686-694
5. M Schatz et al.: "Syntheses and characterization of copper complexes of the ligand (2-aminoethyl)bis(2-pyridylmethyl)amine (uns-penp) and derivatives." Dalton Trans, 2003, 1480-1487
6. M Weitzer et al.: "Reversible Binding of Dioxygen by the Copper(I) Complex with Tris(2-dimethylaminoethyl)amine (Me6tren) Ligand." Inorg Chem 2003, 42, 1800-1806
7. K Komiyama et al.: "Dioxygen Reactivity of Copper(I) Complexes with Tetradentate Tripodal Ligands Having Aliphatic Nitrogen Donors: Synthesis, Structures, and Properties of Peroxo and Superoxo Complexes." Bull Chem Soc Jpn, 2004, 77, 59-72
8. AG Blackmann: "The coordination chemistry of tripodal tetraamine. Polyhedron 2005, 24, 1-39
9. GJP Britovsek et al.: "Non-heme Iron(II) Complexes Containing Tripodal Tetradentate Nitrogen Ligands and Their Application in Alkane Oxidation Catalysis." Inorg Chem 2005, 44, 8125-8134

Alle bisher beschriebenen Cu-(I)- und Cu-(II)-Sauerstoff-Adduktkomplexe sind thermisch instabil; fast alle sind nur bei Temperaturen deutlich unter 0 °C für kurze Zeit haltbar. Durch diese Instabilität sind sie als Oxidationsmittel bwz. Katalysatoren für die Oxidation von Substraten weniger gut geeignet.

Der Stand der Technik kennt allerdings Metall-Sauerstoff-Verbindungen, die als Katalysatoren für Oxidationsreaktionen eingesetzt werden.
So beschreibt die US 6,274,776 B1 ein Verfahren zur Herstellung von 2,5-Dichlorphenol durch selektive Oxidation von 1,4-Dichlorbenzol unter Verwendung von Peroxo-, Hydroperoxo-, Superoxo- oder Alkylperoxometallverbindungen als Katalysatoren. Dabei kommen alle Hauptgruppenmetalle mit Ausnahme der Alkali- und Erdalkalimetalle sowie Übergangs- und Seltenerdmetalle in Frage. Allerdings läuft die beschriebene Oxidationsreaktion nur in Gegenwart von Säuren ab, und die Katalysatoren weisen keine tripodalen tetradentaten Liganden auf.

Die DE 600 24 605 T2 beschreibt Verfahren zur kontrollierten radikalischen Polymerisation von (Meth)acrylamiden unter Verwendung eines Katalysators. Der Katalysator umfasst ein Übergangsmetallsalz - beispielsweise ein Kupferhalogenid -, eine tripodale tetradentate stickstoffhaltige Verbindung, die das Übergangsmetallsalz komplexiert, sowie ein Gegenion. Bei der tripodalen tetradentaten stickstoffhaltigen Verbindung kann es sich beispielsweise um Me₆tren, tmpa oder Bis(2-pyridylmethyl)-(2-phenolylmethyl)amin handeln. Das Gegenion ist bevorzugt ein komplexes Anion auf Onium-Basis, enthält jedoch in keinem Fall Bor als Zentralatom. Komplexe, welche die funktionelle Einheit [~Cu-O-O-Cu~] enthalten, werden in der DE 600 24 605 T2 ebenfalls nicht offenbart.

C.N.Kato et al. beschreibt in dem Artikel mit dem Titel "Oxidation catalysis of microporous metal carboxylate complexes", erschienen in Comptes Rendus Chimie 2007, 10, 284-294, mikroporöse Cu-(II)-carboxylat Komplexe, die als biomimetische heterogene Katalysatoren in Gegenwart von H₂O₂ zur selektiven Oxidation verschiedenster Alkohole genutzt werden können.

Die vorliegende Erfindung überwindet die Nachteile des Standes der Technik, indem sie neuartige Cu-(II)-Sauerstoff-Adduktkomplexe bereitstellt, die thermisch stabil sind, d.h. bei Raumtemperatur und darüber sowie in sauerstoffhaltiger Atmosphäre unzersetzt haltbar sind.

### Aufgabe

Aufgabe der vorliegenden Erfindung ist es, neuartige Kupfer-(II)-Sauerstoff-Adduktkomplexe, welche bei Raumtemperatur stabil sind, sowie Verfahren zu deren Herstellung bereitzustellen.

### Lösung der Aufgabe

Die Aufgabe der Bereitstellung neuartiger Kupfer-(II)-Sauerstoff-Adduktkomplexe wird erfindungsgemäß gelöst durch Verbindungen der allgemeinen Formel 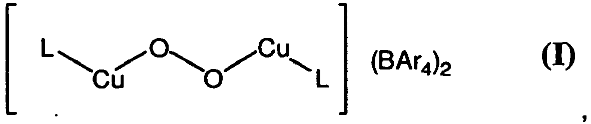 worin
BAr₄ für einer Tetraarylboratanion steht, ausgewählt aus Tetraphenylborat und Tetrakis(3,5-trifluoromethyl)phenylborat
und
L einen tripodalen tetradentaten Liganden darstellt, wobei
a) es sich bei jedem der vier Bindungsstellen des tripodalen tetradentaten Liganden um ein Stickstoffatom handelt, und
b) drei podale stickstoffhaltige Liganden an das zentrale Stickstoffatom gebunden sind und
c) es sich bei dem tripodalen tetradentaten Liganden um einen Liganden der allgemeinen Formel (II) 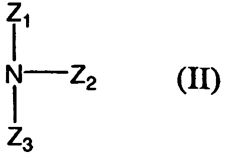 handelt, worin Z₁, Z₂ und Z₃ unabhängig voneinander ausgewählt sind und jeder dieser drei podalen stickstoffhaltigen Liganden unabhängig voneinander ein aliphatisches Amin oder einen stickstoffhaltigen Heteroaromaten umfasst, und
d) sich zwischen dem zentralen Stickstoffatom und dem Stickstoffatom jedes der podalen Liganden eine Brücke aus ein bis vier Kohlenstoffatomen befindet
wobei
- falls es sich bei dem podalen Liganden um einen stickstoffhaltigen Heteroaromaten handelt, die Brücke aus ein bis vier Kohlenstoffatomen genau ein sp²-hybridisiertes Kohlenstoffatom enthält, wobei dieses sp²-hybridisierte Kohlenstoffatom Teil des heterocyclischen Aromaten ist und sich in 2-Stellung zu mindestens einem Stickstoffatom des heterocyclischen Ringes befindet, oder
- falls es sich bei einem podalen Liganden um ein aliphatisches Amin handelt, die Brücke aus ein bis vier Kohlenstoffatomen ausschließlich sp³- hybridisierte aliphatische Kohlenstoffe enthält, und das aliphatische Amin an eine Alkylengruppe aus ein bis vier Kohlenstoffatomen gebunden ist gemäß Formel (III) 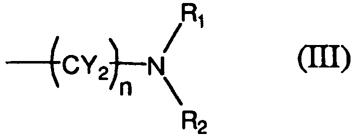
wobei
Y, n, R₁ und R₁ folgende Bedeutung haben und für jede GruppeZ₁, Z₂ und Z₃ unabhängig voneinander ausgewählt werden können
Y = H oder F,
n = 1, 2, 3, 4
und R₁ und R₂ sind unabhängig voneinander ausgewählt aus
- -H, -CH₃, -CH₂CH₃, -CH₂CH₂CH₃, -CH(CH₃)₂, -C(CH₃)₃,
- -CF₃, -CF₂CF₃, -CF₂CF₂CF₃, -CF(CF₃)₂, -C(CF₃)₃,
- wobei für den Fall, dass eine der beiden Gruppen R₁ oder R₂ -C(CH₃)₃ oder -C(CF₃)₃ darstellt, die andere Gruppe R₁ oder R₂ ausgewählt wird aus -H,--CH₃ und -CF₃
- Phenyl, Pentafluorphenyl, Methylphenyl, Dimethylphenyl, Trifluormethylphenyl, (Bis-trifluormethyl)phenyl.

Überraschend wurde gefunden, dass die erfindungsgemäßen Kupfer-(II)-Sauerstoff-Adduktkomplexe im Gegensatz zu den bisher bekannten Cu-(II)-Sauerstoff-Adduktkomplexen thermisch stabil sind. Entscheidend für die thermische Stabilität der erfindungsgemäßen Cu-(II)-Komplexe ist, dass als Anion ein Tetraarylborat gewählt wird, da die entsprechenden Cu-(II)-Sauerstoff-Adduktkomplexe mit anderen Anionen (beispielsweise Perchlorat) thermisch instabil sind.
Erfindungsgemäße Tetraarylborat-Anionen BAr₄⁻ sind Tetraphenylborat und Tetrakis(3,5-trifluoromethyl)phenylborat (BARF).

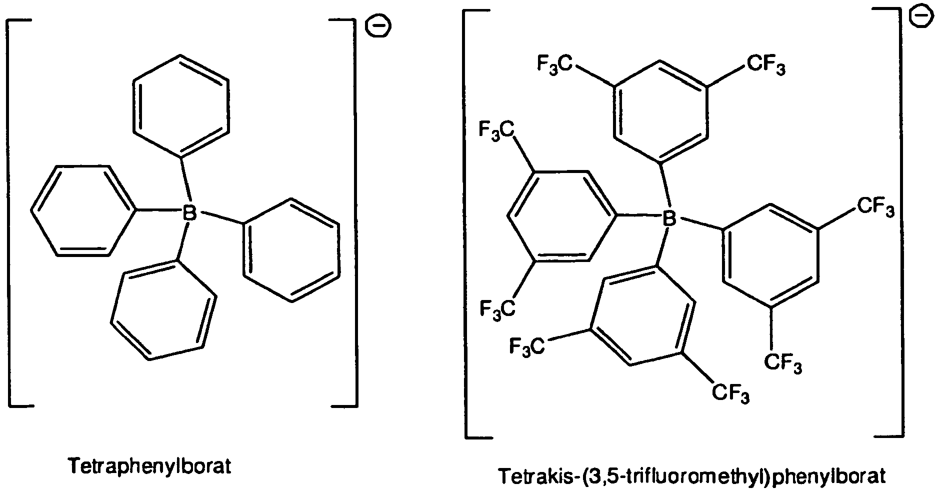

Unter "thermisch stabil" wird dabei verstanden, dass die erfindungsgemäßen Cu-(II)-Sauerstoff-Adduktkomplexe als Feststoffe bei Raumtemperatur und in einer sauerstoffhaltigen Atmosphäre haftbar sind.

In den erfindungsgemäßen Komplexen wird jedes der beiden Cu-Atome durch einen tripodalen tetradentaten Liganden koordiniert. Bei diesem tripodalen tetradentaten Liganden L handelt es sich um einen Liganden der allgemeinen Formel 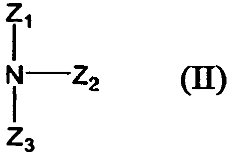 worin Z₁, Z₂ und Z₃ unabhängig voneinander ausgewählt sind aus
- einem aliphatischen Amin, das an einen Alkylengruppe aus ein bis vier Kohlenstoffatomen gebunden ist gemäß Formel 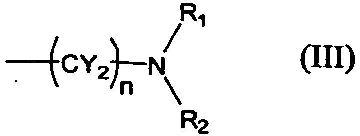
- und einem stickstoffhaltigen Heteroaromaten, welcher in 2-Stellung zu mindestens einem seiner Stickstoffatome an eine Alkylengruppe aus null bis drei Kohlenstoffatomen gebunden ist gemäß 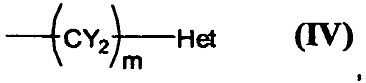 so dass das aromatische sp²-hybridisierte Kohlenstoffatom, welches sich in 2-Stellung zu mindestens einem Stickstoffatom des Heteroaromaten befindet, gemeinsam mit der Alkylengruppe-(CY₂)ₘ- eine Brücke aus einem bis vier Kohlenstoffatomen zwischen dem zentralem Stickstoffatom des Liganden L und dem mindestens einen Stickstoffatom des Heteroaromaten bildet,
wobei
Y, n, m, R₁, R₂ und Het folgende Bedeutungen haben und für jede Gruppe Z₁, Z₂ und Z₃ unabhängig voneinander ausgewählt werden können:
Y H oder F,
n = 1, 2, 3, 4,
m = 0, 1, 2, 3.
und R₁ und R₂ sind unabhängig voneinander ausgewählt aus
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CP(CF₃)₂, C(CF₃)₃,
- wobei für den Fall, dass eine der beiden Gruppen R₁ oder R₂ -C(CH₃)₃ oder -C(CF₃)₃ darstellt, die andere Gruppe R₁ oder R₂ ausgewählt wird aus -H, -CH₃ und CF₃
- Phenyl, Pentafluorphenyl, Methylphenyl, Dimethylphenyl, Trifluormethylphenyl, (Bis-trifluormethyl)phenyl,
und Het ist ein stickstoffhaltiger Heteroaromat, ausgewählt aus

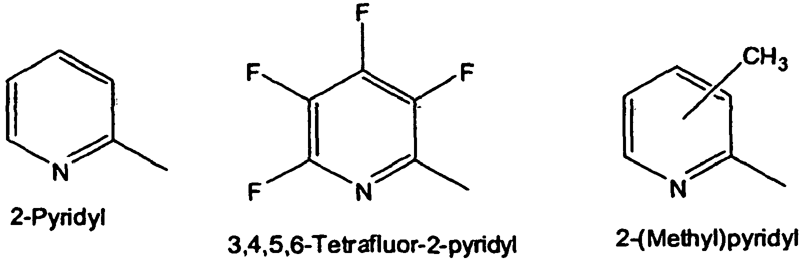

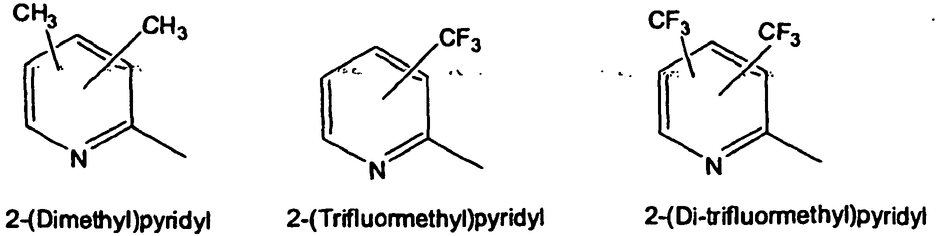

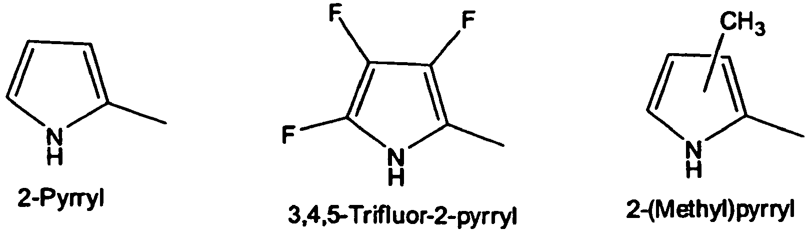

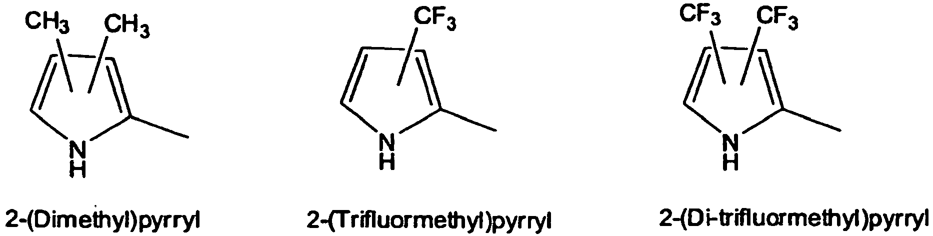

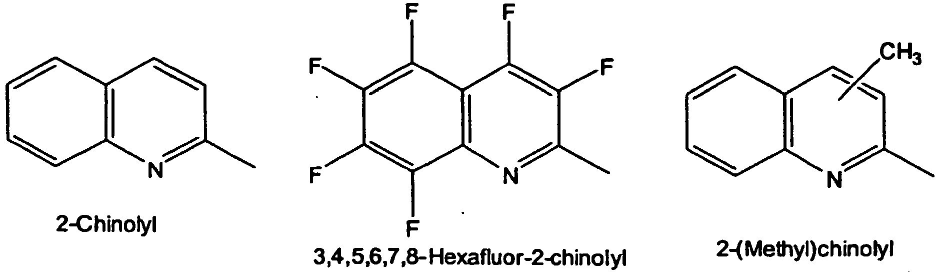

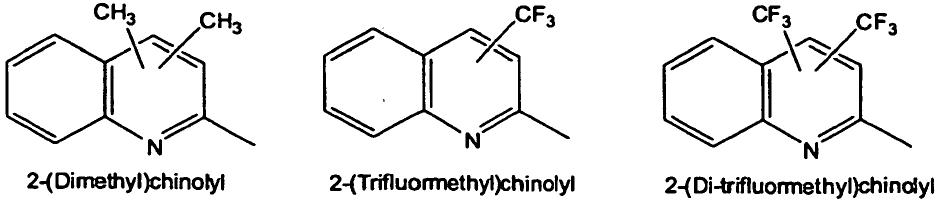

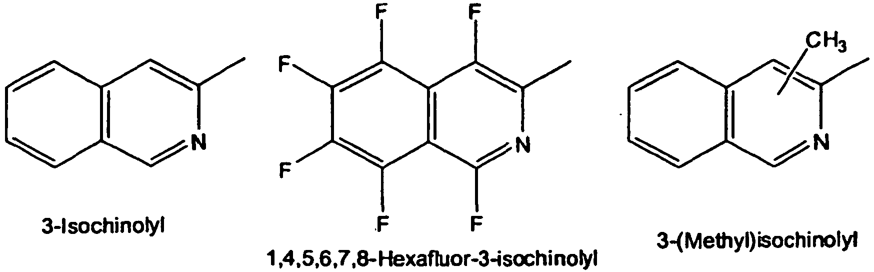

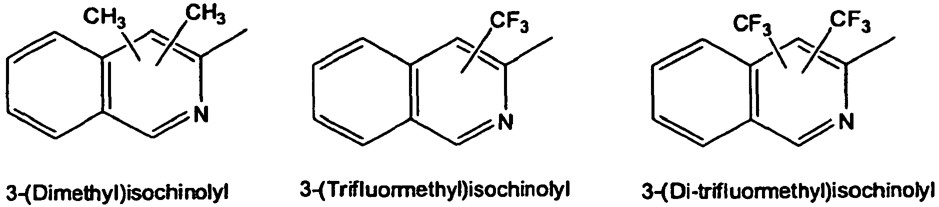

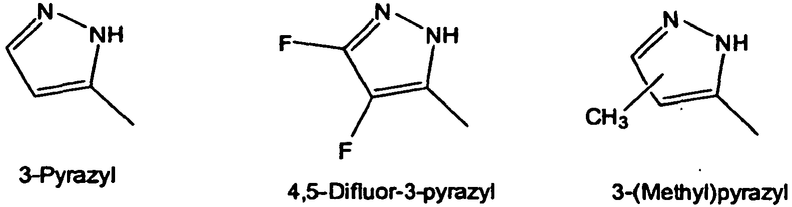

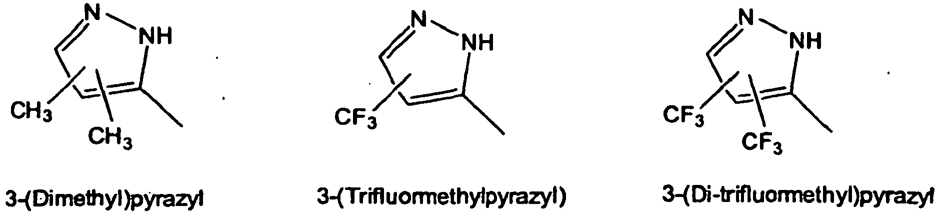

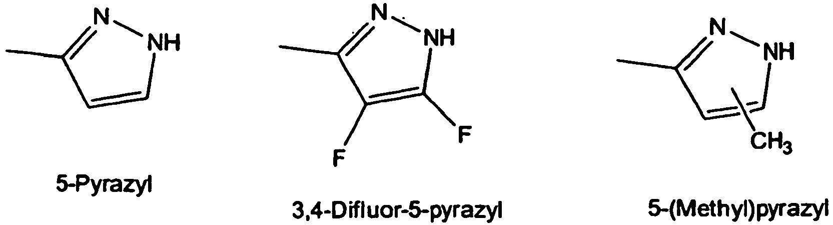

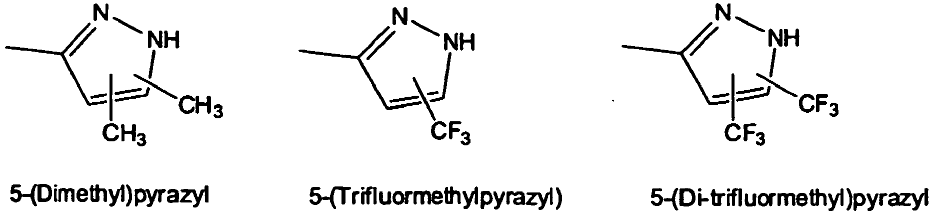

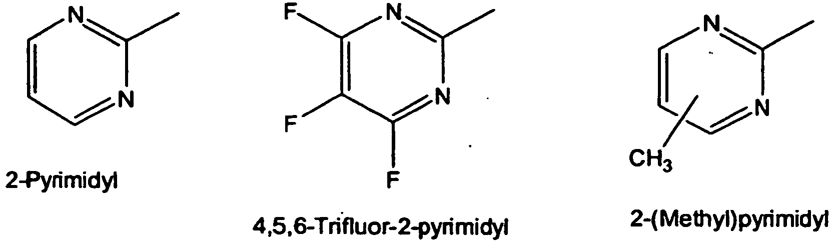

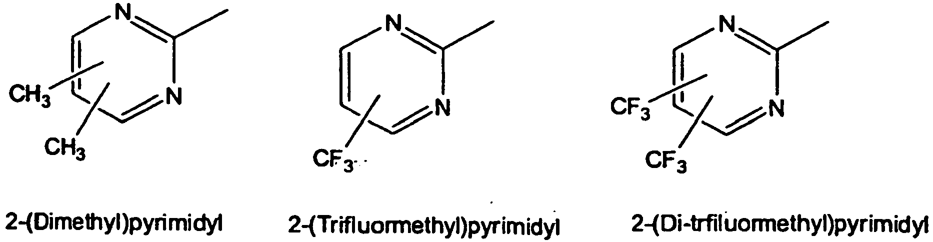

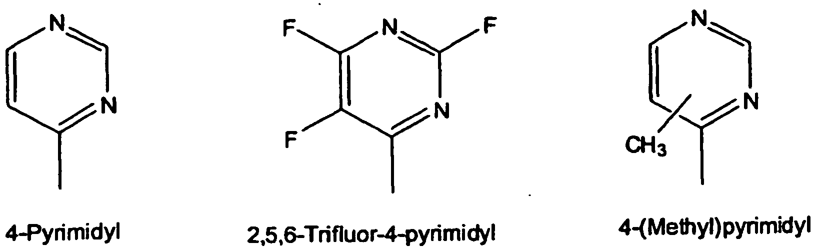

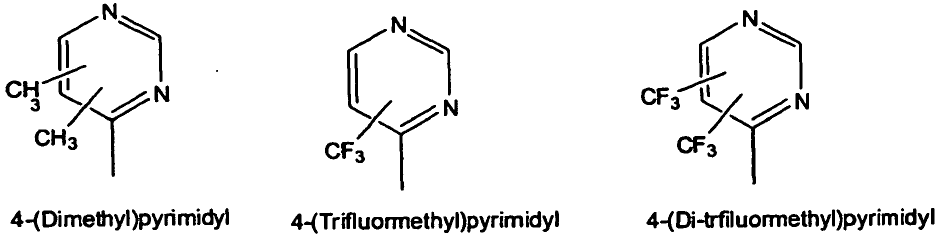

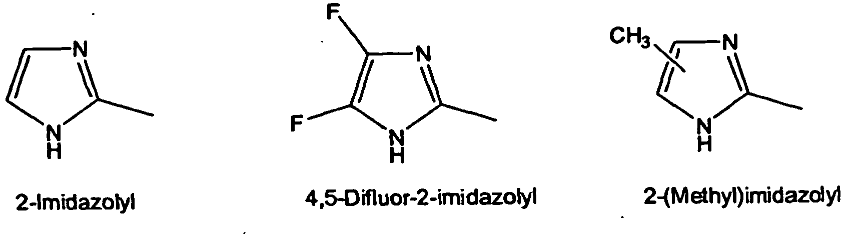

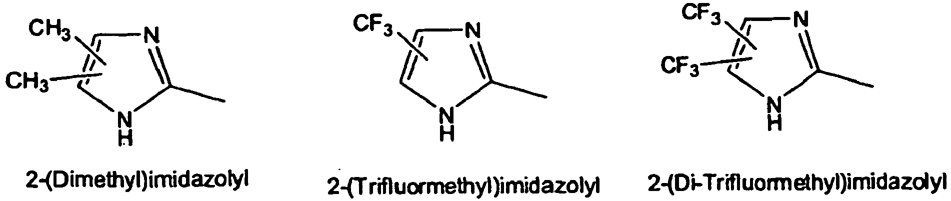

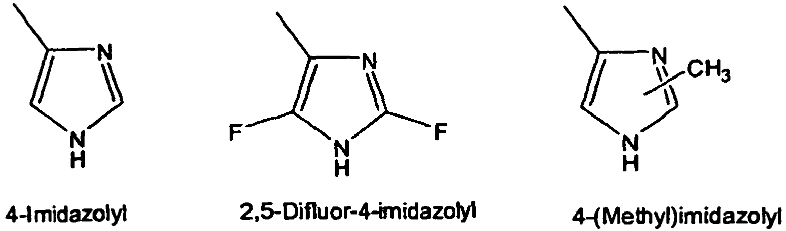

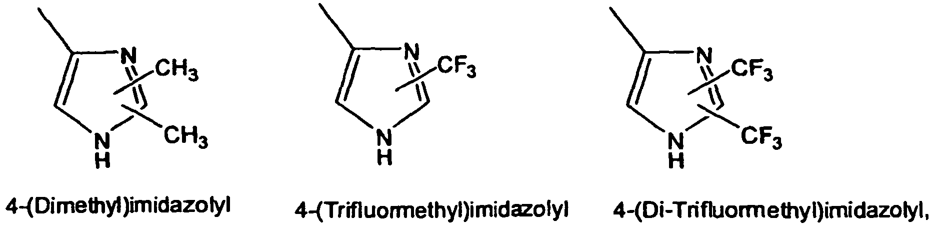

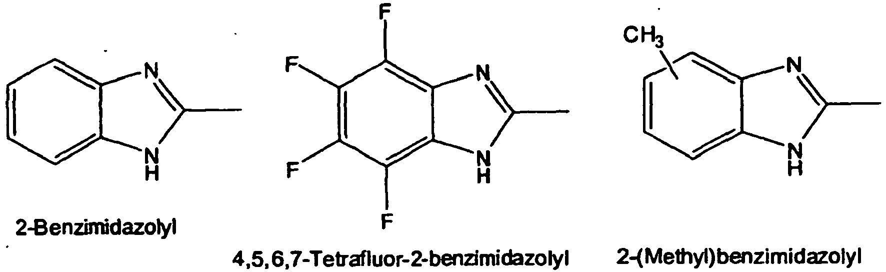

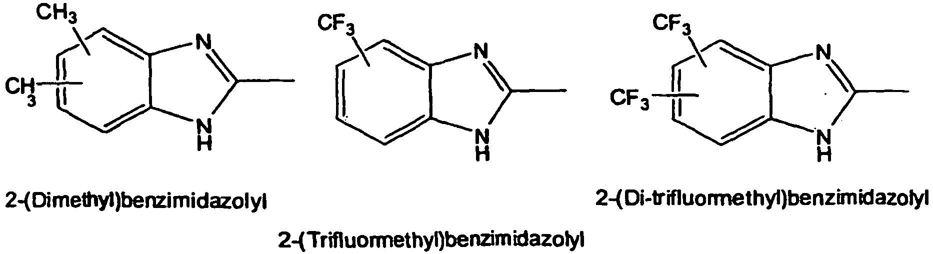

Handelt es sich bei Z₁, Z₂ und / oder Z₃ um eine Gruppe gemäß Formel III, so stellt -(CY₂)ₙ- die Brücke aus einem bis vier Kohlenstoffatomen dar, welche sich erfindungsgemäß zwischen dem zentralen Stickstoffatom und dem Stickstoffatom des jeweiligen podalen Liganden befindet.

Handelt es sich bei Z₁, Z₂ und / oder Z₃ um eine Gruppe gemäß Formel IV, so stellt -(CY₂)ₘ- gemeinsam mit demjenigen sp²-hybridisierten Kohlenstoffatom des heteroaromatischen Ringes, welches sich in 2-Stellung zu mindestens einem Stickstoffatom befindet, die Brücke aus einem bis vier Kohlenstoffatomen dar, welche sich erfindungsgemäß zwischen dem zentralen Stickstoffatom und dem Stickstoffatom des jeweiligen podalen Liganden befindet.

Im Rahmen der vorliegenden Erfindung bezeichnet der Begriff "Ligand" einen tripodalen tetradentaten Liganden, wobei es sich bei jeder seiner vier Bindungsstellen um ein Stickstoffatom handelt. Dabei sind drei stickstoffhaltige Liganden an das zentrale Stickstoffatom gebunden. Die drei stickstoffhaltigen Liganden, welche an das zentrale Stickstoffatom gebunden sind, werden als "podale Liganden" bezeichnet.
In obiger Formel II und den nachfolgend daraus abgeleiteten Formeln **III, IV, V, VI, VII** und **VIII** ist demnach NZ₁Z₂Z₃ der "Ligand", während Z₁, Z₂ und Z₃ die drei "podalen Liganden" darstellen.

In einer bevorzugten Ausführungsform sind die podalen Liganden Z₁, Z₂ und Z₃ unabhängig voneinander ausgewählt aus
- einem aliphatischen Amin, das an einen Alkylengruppe aus ein bis vier Kohlenstoffatomen gebunden ist gemäß Formel 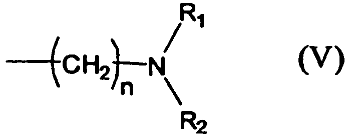 und
- einem stickstoffhaltigen Heteroaromaten welcher in 2-Stellung zu mindestens einem seiner Stickstoffatome an eine Alkylengruppe aus null bis drei Kohlenstoffatomen gebunden ist gemäß Formel 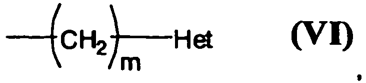
worin n, m, R₁, R₂ und Het für jede Gruppe Z₁, Z₂ und Z₃ unabhängig voneinander gewählt werden können und die oben aufgeführten Bedeutungen haben. Auch in dieser Ausführungsform wird für den Fall, dass eine der beiden Gruppen R₁ oder R₂ -C(CH₃)₃ oder -C(CF₃)₃ darstellt, die andere Gruppe R₁ oder R₂ ausgewählt aus -H, -CH₃ und CF₃. Es handelt sich bei dieser Ausführungsform um podale Liganden, bei denen die Alkylengruppen, welche sich zwischen dem zentralen Stickstoffatom und den podalen Liganden befinden, nicht fluoriert sind.

In einer weiteren Ausführungsform sind solche podalen Liganden Z₁, Z₂ und Z₃ bevorzugt, bei denen die Brücke aus Kohlenstoffatomen, welche sich zwischen dem zentralen Stickstoffatom und dem Stickstoffatom jedes podalen Liganden befindet, genau zwei Kohlenstoffatome umfasst, wobei diese Brücken-Kohlenstoffatome nicht fluoriert sind. Handelt es sich bei einem derartigen podalen Liganden um ein aliphatisches Amin, so ist es ein Amin gemäß der Formel

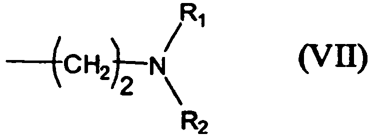

Umfasst ein derartiger podaler Ligand dagegen einen stickstoffhaltigen Heteroaromaten, welcher in 2-Stellung zu mindestens einem seiner Stickstoffatome an eine Alkylengruppe gebunden ist, so stellt die Alkylengruppe in diesem Fall eine Methylengruppe dar. Der podale, einen stickstoffhaltigen Heteroaromaten umfassende Ligand wird in diesem Falle beschrieben durch Formel

-CH₂-Het **(VIII)**

Dabei haben R₁ und R₂ in Formel (VII) sowie Het in Formel (VIII) die oben aufgeführten Bedeutungen. R₁, R₂ und Het können für jede Gruppe Z₁, Z₂ und Z₃ unabhängig voneinander gewählt werden, wobei für den Fall, dass eine der beiden Gruppen R₁ oder R₂ -C(CH₃)₃ oder -C(CF₃)₃ darstellt, die andere Gruppe R₁ oder R₂ ausgewählt aus -H, -CH₃ und CF₃.

Ganz besonders bevorzugt sind Liganden L,
- bei denen die Brücken zwischen dem zentralen Stickstoffatom und dem Stickstoffatom jedes der podalen Liganden genau zwei Kohlenstoffatome umfassen, und
- bei denen die Kohlenstoffatome nicht fluoriert sind,
- wobei R₁ und R₂ unabhängig voneinander sowie für jeden podalen Liganden unabhängig ausgewählt sind aus
   -H, -CH₃, -CH₂CH₃, -CH₂CH₂CH₃, -CH(CH₃)₂, C(CH₃)₃,
- worin für den Fall, dass eine der beiden Gruppen R₁ oder R₂ -C(CH₃)₃ darstellt, die andere Gruppe R₁ oder R₂ ausgewählt aus -H und -CH₃
   und
- Het ausgewählt ist aus
   2-Pyridyl, 2-Pyrryl, 2-Chinolyl, 3-Isochinolyl, 3-Pyrazyl, 5-Pyrazyl, 2-Pyrimidyl, 4-Pyrimidyl, 2-Imidazolyl, 4-Imidazolyl, 2-Benzimidazolyl.

Am meisten bevorzugt sind solche Kupfer-(II)-Sauerstoff-Adduktkomplexe der allgemeinen Formel
[L-Cu-O-O-Cu-L](BAr₄)₂, bei denen der tripodale tetradentate Ligand L ausgewählt ist aus Tris-(2-dimethylaminoethyl)-amin, Bis-[2-dimethylaminoethyl-(2-pyridylmethyl)]-amin, [(2-Dimethylaminoethyl)-bis-(2-pyridylmethyl)]-amin, Tris-[(2-pyridyl)-methyl]-amin.

Bei allen genannten Ausführungsformen sind solche Adduktkomplexe bevorzugt, bei denen das Anion Tetraphenylborat ist.

Die Aufgabe, Verfahren zur Herstellung der erfindungsgemäßen Kupfer-(II)-Sauerstoffadduktkomplexe bereitzustellen, wird erfindungsgemäß gelöst durch ein Verfahren umfassend die Schritte
a) Komplexierung des Liganden L mit einer Cu-(I)-Verbindung [eu(R₃)₄]X in einem polar aprotischen Lösungsmittel unter Schutzgasatmosphäre
b) Austausch des Anions X des Cu-(I)-Komplexes in einem polar aprotischen Lösungsmittel unter Schutzgasatmosphäre,
c) in Kontakt bringen des nach Durchführung von Schritt b) erhaltenen [Cu-L]-Tetraarylborats mit einer sauerstoffhaltigen Atmosphäre,
d) Isolierung und Trocknung des nach Durchführung von Schritt c) erhaltenen Komplexes [L-Cu-O-O-Cu-L](BAr₄)₂.

Die Herstellung der erfindungsgemäßen Cu-(II)-Sauerstoff-Adduktkomplexe erfolgt nach dem allgemeinen Reaktionsschema
a) L + [Cu(R₃)₄]X → [Cu-L]X
b) [Cu-L]X + MeBAr₄ → [Cu-L]BAr₄
c) 2 [Cu-L]BAr₄ + O₂ → [L-Cu-O-O-Cu-L](BAr₄)₂

Dabei ist L ein Ligand gemäß obiger Definition.

Im ersten Schritt wird der Ligand L in einem polar aprotischen Lösungsmittel mit einem Salz [Cu(R₃)₄]X unter Schutzgasatmosphäre zum entsprechenden [Cu-(I)-L]-Komplex umgesetzt.
R₃ kann dabei Acetonitril oder kein Atom sein.
Ist R₃ Acetonitril, so wird das Anion X ausgewählt aus Hexafluorophosphat PF₆⁻, Tetrafluoroborat BF₄⁻, Perchlorat ClO₄⁻ , Hexafluoroantimonat SbF₆⁻, Triflat SO₃CF₃⁻ und Tetraphenylborat BPh₄⁻, Tetrakis(3,5-trifluoromethyl)phenylborat, wobei PF₆⁻, BF₄⁻ und ClO₄⁻ bevorzugt sind.
Ist R₃ kein Atom, so wird X ausgewählt aus Chlorid Cl⁻, Bromid Br⁻ und Iodid I⁻. Bei dem polar aprotischen Lösungsmittel handelt es sich bevorzugt um Aceton, Acetonitril oder Propionitril.

Vorteilhaft werden Ligand L und (Cu(R₃)₄]X im Molverhältnis von etwa 1:1 eingesetzt, wobei der Ligand in einem molaren Überschuss von bis zu 10 % vorliegen kann.

Im zweiten Schritt wird die aus Schritt a) erhaltene Lösung des Komplexes [L-Cu(I)]X mit einer Lösung eines Metall-Tetraarylborats unter Schutzgasatmosphäre umgesetzt.
Bei dem Metall-Tetraphenylborat handelt es sich um ein Alkalimetall-Tetraarylborat, beispielsweise Natrium-Tetraarylborat oder Kalium-Tetraarylborat. Als Lösungsmittel für das Metall-Tetraarylborat dient ein polar aprotisches Lösungsmittel, beispielsweise Aceton, Acetonitril oder Propionitril. Vorteilhaft wird für Schritt b) dasselbe polar aprotische Lösungsmittel gewählt wie für Schritt a).
Das Molverhältnis von [L-Cu(I)]X zu Tetraarylborat beträgt vorteilhaft etwa 1:1, wobei Tetraarylborat in einem leichten Überschuss von bis zu 10 % vorliegen kann.
Die Umsetzung des Liganden L mit [Cu(R₃)₄]X sowie dessen nachfolgende Reaktion mit Tetraarylborat zu [L-Cu]BAr₄ werden unter Schutzgasatmosphäre durchgeführt. Unter Schutzgasatmosphäre wird eine sauerstofffreie Inertgasatmosphäre verstanden. Vorzugsweise besteht diese Schutzgasatmosphäre aus Argon, Helium oder Stickstoff.

Die Lösung des aus Schritt b) erhaltenen [L-Cu-(I)]BAr₄-Komplexes wird anschließend gemäß Schritt c) einer sauerstoffhaltigen Atmosphäre ausgesetzt. Dabei bildet sich der korrespondierende Cu-(II)-Peroxo-Adduktkomplex [L-Cu-O-O-Cu-L](BAr₄)₂. Unter "einer sauerstoffhaltigen Atmosphäre aussetzen" wird dabei verstanden, dass [L-Cu-(I)]BAr₄ Luft, Sauerstoffgas oder einem Sauerstoff-Luft-Gemisch ausgesetzt wird.
Die [L-Cu-(I)]BAr₄-Lösung wird auf Temperaturen < -70 °C gekühlt, bevor sie der sauerstoffhaltigen Atmosphäre ausgesetzt wird.

Der gebildete Cu-(II)-Peroxo-Adduktkomplex [L-Cu-O-O-Cu-L](BAr₄)₂ wird anschließend durch Zugabe eines aprotischen Lösungsmittels ausgefällt, abfiltriert und getrocknet. Die Ausfällung erfolgt dabei bei tiefen Temperaturen < -70 °C, und die Trocknung erfolgt im Sauerstoffstrom.

Zur Fällung geeignete aprotische Lösungsmittel sind dem Fachmann bekannt und können angewendet werden, ohne den Schutzbereich der Patentansprüche zu verlassen. Geeignet sind beispielsweise Diethylether, Pentan, Hexan, Heptan und Cycloalkane mit 5 bis 8 Kohlenstoffatomen.

Alternativ kann bereits das Produkt aus Schritt b), nämlich [L-Cu-(I)]BAr₄, aus der Lösung isoliert und getrocknet werden. Dies geschieht beispielsweise durch Ausfällen mit einem aprotischen Lösungsmittel, Abfiltrieren des Feststoffs und dessen Trocknung unter Schutzgasatmosphäre im Vakuum. Als aprotisches Lösungsmittel eignen sich beispielsweise Diethylether, Pentan, Hexan, Heptan und Cycloalkane mit 5 bis 8 Kohlenstoffatomen.
Wird bereits [L-Cu-(I)]BAr₄ als Feststoff isoliert und getrocknet, so kann er ebenfalls wie oben gemäß Schritt c) beschrieben einer sauerstoffhaltigen Atmosphäre ausgesetzt werden, wodurch sich der Cu-(II)-Peroxo-Adduktkomplex [L-Cu-O-O-Cu-L](BAr₄)₂ bildet. Die Isolierung des Feststoffs [L-Cu-(I)]BAr₄ kann bei Raumtemperatur erfolgen, wobei die Trocknung jedoch unter Schutzgasatmosphäre erfolgt. Anschließend wird [L-Cu-(I)]BAr₄ als Feststoff bei Raumtemperatur einer sauerstoffhaltigen Atmosphäre ausgesetzt, wobei sich [L-Cu-O-O-Cu-L](BAr₄)₂ bildet.

Die erfindungsgemäßen Cu-(II)-Sauerstoff-Adduktkomplexe können als Oxidationskatalysatoren verwendet werden, beispielsweise für die Oxidation von Benzol zu Phenol oder Methan zu Methanol, für die Oxidation von Wasserstoff, aromatischen und aliphatischen, gesättigten und ungesättigten Kohlenwasserstoffen sowie Alkoholen und Aminen.
Des Weiteren kann der Nachweis der erfindungsgemäßen Cu-(II)-Sauerstoff-Adduktkomplexe für die Detektion von Sauerstoff verwendet werden. Hierzu wird ein Komplex [L-Cu(I)]BAr₄] in einer Vorrichtung vorgelegt; die mit Hilfe eines oder mehrerer Hähne von der äußeren Atmosphäre abgeschlossen werden kann. Bei dieser Vorrichtung handelt es sich beispielsweise um eine Durchflussleitung oder ein Glasgefäß. Durch Öffnung des oder der Hähne der Vorrichtung wird das zu untersuchende Gasgemisch mit dem erfindungsgemäßen Komplex in Kontakt gebracht. Ohne Anwesenheit von Sauerstoff behält der Komplex seine weiße bzw. gelbe Farbe bei, während er in Gegenwart von Sauerstoff tiefblau wird, da sich [L-Cu-O-O-Cu-L](BAr₄)₂ bildet.

Die erfindungsgemäßen Cu-(II)-Sauerstoff-Adduktkomplexe können optional als reaktive Komponenten in mesoporöse Phasen wie Molsiebe oder auf Zeolithe oder Polystyrole aufgebracht werden. Verfahren zur Aufbringung reaktiver Komponenten in mesoporöse Phasen, Zeolithe und Polystyrole sind dem Fachmann bekannt und können angewendet werden, ohne den Schutzbereich der Patentansprüche zu verlassen.
Exemplarisch sei hier das Aufbringen eines erfindungsgemäßen Cu-(II)-Sauerstoff-Adduktkomplexes in ein Molsieb genannt: Hierzu wird das Molsieb mit einer Lösung (Aceton) des entsprechenden [L-Cu]BAr₄-Komplexes unter Schutzgasatmosphäre getränkt. Das mit diesem [L-Cu]BAr₄-Komplex beladene Molsieb wird anschließend wie oben beschrieben einer sauerstoffhaltigen Atmosphäre ausgesetzt, wobei sich an der Oberfläche der Molsiebkügelchen der blaue Peroxokomplex [L-Cu-O-O-Cu-L](BAr₄)₂ bildet.

### Ausführungsbeispiele

### Ausführungsbeispiel 1:

### Herstellung des Liganden

### Tris-(2-dimethylaminoethyl)amin (Me₆tren)

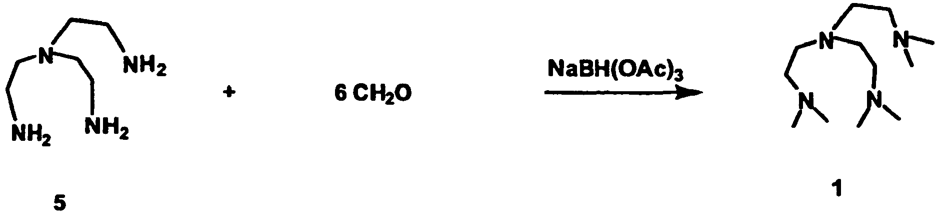

Me₆tren wurde wie in Britovsek et al., Inorg Chem 2005, 44, 8125-8134 beschrieben hergestellt und anschließend durch Destillation gereinigt.

Zu 3,0 mL (19,9 mmol) tren (5), 135 mL Essigsäure und 600 mL Acetonitril wurden 49 mL einer wässrigen Formaldehylösung (37%, 660 mmol) gegeben und die Mischung eine Stunde bei Raumtemperatur gerührt. Zu der im Eisbad auf 0 °C gekühlten Lösung wurden langsam 10,0 g (13,4 mmol) Natriumborhydrid hinzugegeben. Nach 48 h rühren bei Raumtemperatur wurden das Lösungsmittel entfernt, der Rückstand mit 3 M Natronlauge stark basisch eingestellt und dreimal mit je 50 mL Dichlormethan extrahiert. Die vereinigten organischen Phasen wurden über Magnesiumsulfat getrocknet und das Lösungsmittel unter Vakuum entfernt. Der Rückstand wurde in Pentan gelöst, filtriert, und aus dem Filtrat das Lösungsmittel im Vakuum abgezogen. Die gelbliche Flüssigkeit wurde anschließend mittel Kugelrohrdestillation gereinigt. Als Produkt (1) wurde ein farbloses Öl erhalten.
**¹H-NMR** (CDCl₃): 2.55 (6H,t), 2.32 (6H,t), 2.16 (18H, s)

### Ausführungsbeispiel 2:

### Herstellung des Liganden

### Bis-[2-aminoethyl-(2-pyridylmethyl)]amin (Me₄apme)

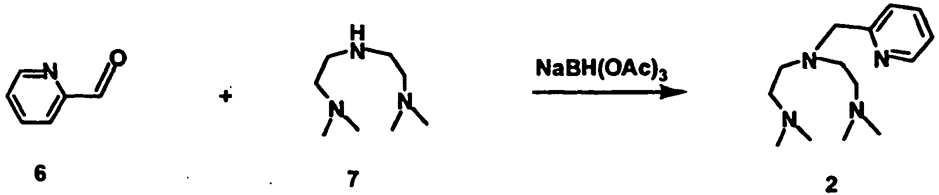

Me₄apme wurde wie in Britovsek et al., Inorg Chem 2005, 44, 8125-8134 beschrieben hergestellt und anschließend durch Destillation gereinigt.

Es wurden 1,96 g (12,3 mmol) Bis[2-(dimethylamino)ethyl]amin (7) und 3,66 g (17,22 mmol) Natriumtriacetobohydrid in 100 ml Dichlormethan vorgelegt und nach der Zugabe von 1,18 g (12,32 mmol) frisch destilliertem Pyridin-2-carboxaldehyd (6) 12 Stunden bei Raumtemperatur gerührt. Die Reaktion wurde durch Zugabe von 120 **ml** 3molarer NaOH-Lösung beendet. Die organische Phase wurde abgetrennt und die wässrige Phase dreimal mit je 100 ml Dichlormethan extrahiert. Die vereinigten organischen Phasen wurden über MgSO₄ getrocknet und das Lösungsmittel unter Vakuum im entfernt. Der Rückstand wurde in 100 ml wasserfreiem THF gelöst, mit 0,6 g NaH (durch Waschen mit wasserfreiem Petrolether vom Mineralöl befreit) versetzt und 2 Stunden lang bei Raumtemperatur gerührt. Anschließend wurde das Lösungsmittel im Vakuum entfernt und der Rückstand dreimal mit je 50 ml Pentan extrahiert. Die Extrakte wurden vereinigt und das Lösungsmittel im Vakuum entfernt. Das gelbe viskose Rohprodukt wurde mittels Kugelrohrdestillation bei 130°C gereinigt. Als Produkt (2) wurde ein gelbliches Öl erhalten.
**¹H-NMR** (CDCl₃): 8.47 (1H,d), 7.59 (1H,t), 7.43 (1H, d), 7.09 (1H, t), 3.75 (2H, s), 2.62 (4H, t), 2.38 (4H, t), 2.15 (12H, s)

### Ausführungsbeispiel 3:

### Herstellung des Liganden

### (2-Aminoethyl)-bis(2-pyridylmethyl)amin (Me₂uns-penp)

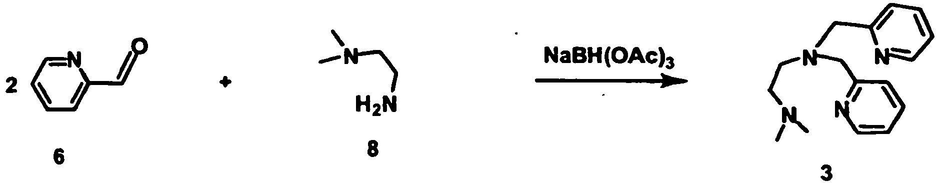

Zu einem Gemisch aus 0,88 g (10 mmol) N,N-dimethylethan-1,2-diamin und 2,14 g (20 mmol) frisch destillierten Pyridin-2-carboxaldehyd in 60 ml 1,2-Dichlorethan wurden unter Rühren 6,0 g (28,3 mmol) Natriumtriacetoborhydrid zugegeben und weitere 48 Stunden bei Raumtemperatur gerührt. Die Reaktion wurde durch Zugabe einer 2 molaren wässrigen Natriumhydroxid-Lösung beendet. Die organische Phase wurde abgetrennt und die wässrige Phase zweimal mit je 100 ml Dichlormethan extrahiert. Die vereinigten organischen Phasen wurden mit 100 ml gesättigter wässriger Kochsalzlösung gewaschen und anschließend über NaSO₄ getrocknet. Die Lösungsmittel wurden unter Vakuum entfernt und der braune ölige Rückstand mit Diethylether extrahiert. Anschließend wurde das Lösungsmittel im Vakuum entfernt. Als Produkt (3) wurde ein rötliches Öl erhalten.
**¹H-NMR** (CDCl₃): 8.52 (2H,d), 7.65 (2H,t), 7.53 (2H, d), 7.14 (2H, m), 3.86 (4H, s), 2.71 (2H, t), 2.48 (2H, t), 2.17 (6H, s)

### Ausführungsbeispiel 4:

### Herstellung des Liganden

### Tris-[(2-pyridyl)-methyl]amin (tmpa)

### tmpa

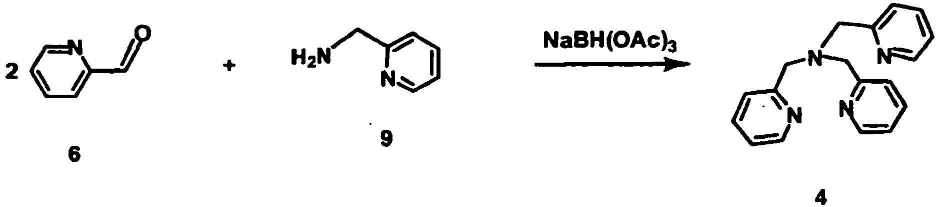

Zu einer Mischung von 2,16 g (20,0 mmol) 2-(Aminomethyl)pyridin (9) und 12,6 g (214 mmol) Natriumtriacetoxyborhydrid in 300 mL Dichlormethan wurden 4 mL (42,0 mmol) frisch destilliertes Pyridin-2-carbaldehyd (6) hinzugegeben. Nachdem die gelbliche Mischung 18 h bei Raumtemperatur gerührt wurde, wurde eine gesättigte Lösung von Natriumhydrogencarbonat zugegeben. Die Mischung wurde 15 min bei Raumtemperatur gerührt, zweimal mit Ethylacetat extrahiert und die vereinigten organischen Phasen über Magnesiumsulfat getrocknet. Das Lösungsmittel wurden im entfernt und der gelbe dickflüssige Rückstand dreimal mit Petrolether extrahiert. Die vereinigten organischen Phasen wurden im Vakuum vom Lösungsmittel befreit. Als Produkt (4) wurde ein gelbliches Feststoff erhalten.
**¹H-NMR** (CDCl₃): 8.55 (3H,d), 7.84 (3H,t), 7.79 (3H, d), 7.24 (3H, m), 3.87 (6H, s)

### Ausführungsbeispiel 5:

### Herstellung von [Cu(Me₆tren)]BPh₄

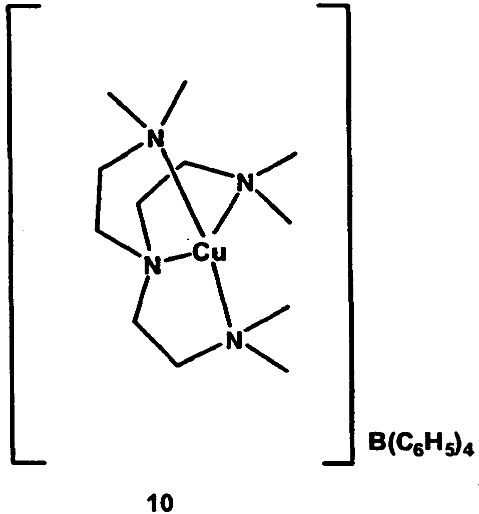

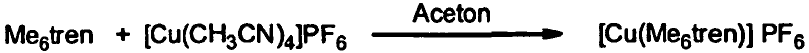

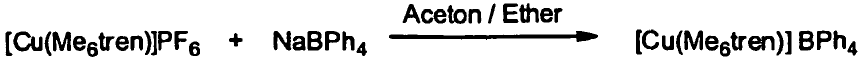

Es wurden 0,20 g (0,87 mmol) Me₆tren (1) in etwa 2 ml Aceton gelöst und unter ständigem Rühren langsam mit eine Lösung von 0,30 g (0,81 mmol) [Cu(CH₃CN)₄]PF₆ (Tetrakis(acetonitril)kupfer(I)-hexafluorophosphat) in etwa 4 ml Aceton versetzt. Die so entstandene farblose Komplexlösung wurde anschließend zum Anionenaustausch mit einer Lösung von 0,28 g (0,82 mmol) NaBPh₄ (Natriumtetraphenylborat) in etwa 2 ml Aceton versetzt. Zur Darstellung des Feststoffes wurde die Komplexlösung in 20 ml Diethylether gegeben. Der entstandene voluminöse Feststoff des [Cu(Me₆tren)]BPh₄ (10) wurde im Vakuum getrocknet. Als Produkt wurden 0,48 g (96,6 %) eines farblosen Pulvers erhalten.
Alle Arbeiten wurden in einer Argon-Box durchgeführt. Es ist jedoch möglich alle Arbeiten auch mittels Schlenk-Technik unter Argon oder Stickstoff durchzuführen.

Der Komplex [Cu(Me₆tren)]BPh₄ ist in Fig. 1 gezeigt.
Die Ergebnisse der Kristallstrukturanalyse von [Cu(Me₆tren)]BPh₄ sind in Fig. 2 gezeigt.

### Ausführungsbeispiel 6:

### Herstellung von [Cu(Me₄apme)]BPh₄

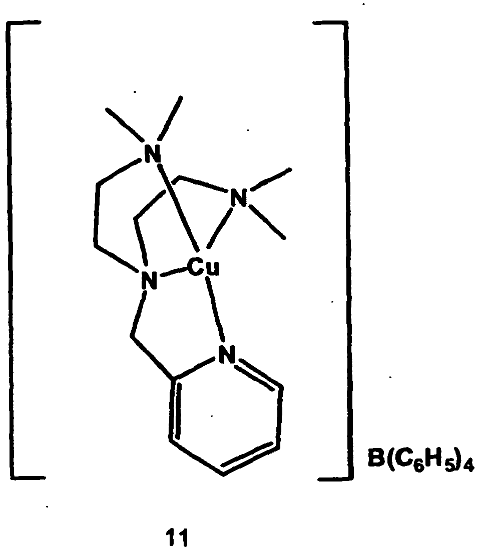

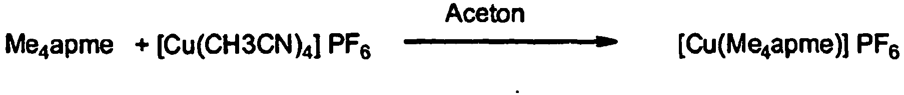

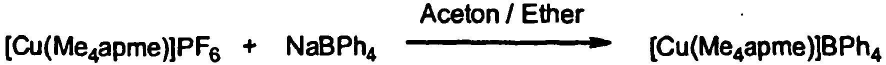

Es wurden 0,20 g (0,80 mmol) Me₄apme (2) in etwa 2 ml Aceton gelöst und unter ständigem Rühren langsam mit einer Lösung von 0,29 g (0,78 mmol) [Cu(CH₃CN)₄]PF₆ (Tetrakis(acetonitril)kupfer(I)-hexafluorophosphat) in etwa 4 ml Aceton versetzt. Die so entstandene gelbe Komplexlösung wurde anschließend zum Anionenaustausch mit eine Lösung von 0,28 g (0,82 mmol) NaBPh₄ (Natriumtetraphenylbora)in etwa 2 ml Aceton versetzt. Zur Darstellung des Feststoffes wurde die Komplexlösung in 20 ml Diethylether gegeben. Der entstanden voluminöse Feststoff des [Cu(Me₄apme)]BPh₄ (11) wurde im Vakuum getrocknet. Als Produkt wurden 0,44 g (89,1 %) eins gelbes Pulver erhalten.
Alle Arbeiten wurden in einer Argon-Box durchgeführt. Es ist jedoch möglich alle Arbeiten auch mittels Schlenk-Technik unter Argon oder Stickstoff durchzuführen.

### Ausführungsbeispiel 7:

### Herstellung von [Cu(Me₂uns-penp)]BPh₄

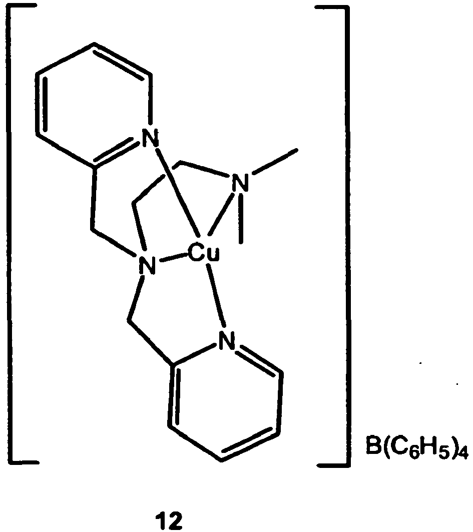

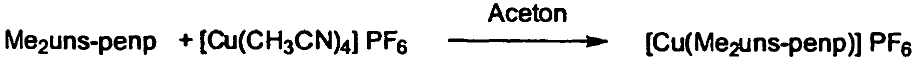

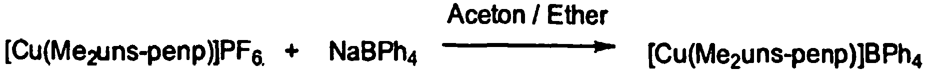

Es wurden 0,20 g (0,74 mmol) Me₂uns-penp (**3**) in etwa 2 ml Aceton gelöst und unter ständigem Rühren langsam mit eine Lösung von 0,27 g (0,72 mmol) [Cu(CH₃CN)₄]PF₆ (Tetrakis(acetonitril)kupfer(I)-hexafluorophosphat) in etwa 4 ml Aceton versetzt. Die so entstandene orange Komplexlösung wurde anschließend zum Anionenaustausch mit eine Lösung von 0,28 g (0,82 mmol) NaBPh₄ (Natriumtetraphenylbora) in etwa 2 ml Aceton versetzt. Zur Darstellung des Feststoffes wurde die Komplexlösung in 20 ml Diethylether gegeben. Der entstanden voluminöse Feststoff des [Cu(Me₂uns-penp)]BPh₄ (**12**) wurde im Vakuum getrocknet. Als Produkt wurden 0,46 g (97,8 %) eins gelbes Pulver erhalten.
Alle Arbeiten wurden in einer Argon-Box durchgeführt. Es ist jedoch möglich alle Arbeiten auch mittels Schlenk-Technik unter Argon oder Stickstoff durchzuführen.

Der Komplex [Cu(Me₂uns-penp)]BPh₄ ist in Fig. 3 gezeigt.

### Ausführungsbeispiel 8:

### Herstellung von [Cu(tmpa)]BPh₄

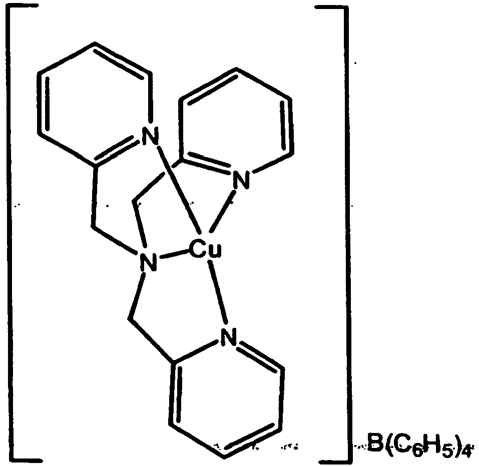

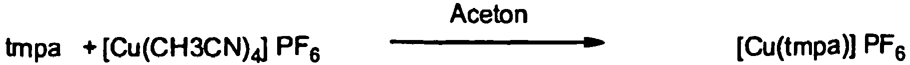

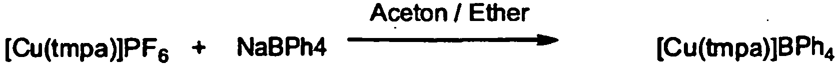

Es wurden 0,20 g (0,69 mmol) tmpa (**4**) in etwa 2 ml Aceton gelöst und unter ständigem Rühren langsam mit eine Lösung von 0,25 g (0,67 mmol) [Cu(CH₃CN)₄]PF₆ (Tetrakis(acetonitril)kupfer(I)-hexafluorophosphat) in etwa 4 ml Aceton versetzt. Die so entstandene orange Komplexlösung wurde anschließend zum Anionenaustausch mit eine Lösung von 0,28 g (0,82 mmol) NaBPh₄ (Natriumtetraphenylborat) in etwa 2 ml Aceton versetzt. Zur Darstellung des Feststoffes wurde die Komplexlösung in 20 ml Diethylether gegeben. Der entstanden voluminöse Feststoff des [Cu(tmpa)]BPh₄ (**13**) wurde im Vakuum getrocknet. Als Produkt wurden 0,41 g (90,9 %) eins gelbes Pulver erhalten.
Alle Arbeiten wurden in einer Argon-Box durchgeführt. Es ist jedoch möglich alle Arbeiten auch mittels Schlenk-Technik unter Argon oder Stickstoff durchzuführen.

Der Komplex [Cu(tmpa)]BPh₄ ist in Fig. 4 gezeigt.

### Ausführungsbeispiel 9:

### Herstellung des Peroxokomplexes [Cu₂(Me₆tren)₂(O₂)](BPh₄)₂

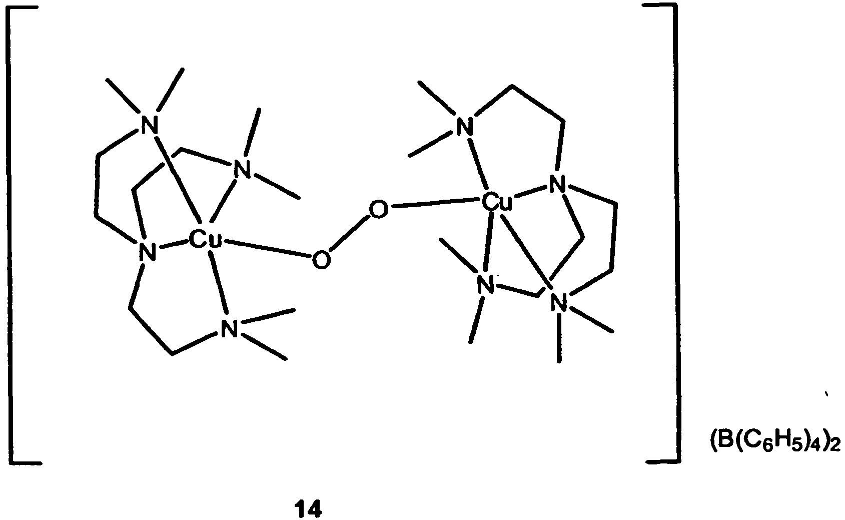

2 [Cu(Me₆tren)] BPh₄ + O₂ → [Cu₂(Me₆tren)₂(O₂)](BPh₄)₂

Der frisch hergestellte Cu(I)-Komplex **10** wurde als farbloses Pulver, unter Argon in einem verschlossenen Gefäß aus der Argon-Box geholt. Nach dem Öffnen des Gefäßes wurde der Cu(I)-Komplex mit Sauerstoffgas (Luft ist auch möglich) versetzt. Es bildet sich innerhalb Sekunden der intensiv blau gefärbte Peroxokomplex **14.**

### Alternative Darstellung:

Eine farbloses Lösung des Cu(I)-Komplex **10** in Aceton oder Acetonitril wurde, unter Argon in einem verschlossenen Gefäß, aus der Argon-Box geholt. Die Lösung wurde in einem Ethanolbad auf -80°C heruntergekühlt und mit Sauerstoffgas (Luft ist auch möglich) zur Reaktion gebracht. Es bildet sich innerhalb von Sekunden die intensiv blau gefärbte Peroxokomplex-Lösung. Durch die Zugabe von kaltem (-80°C) Diethylether fällt der Peroxokomplex als voluminöser Feststoff aus. Durch Filtration und Trocknung (mit Sauerstoffgas) bei -80°C kann der Peroxokomplex (14) schließlich raumtemperaturstabil isoliert werden.

Fig. 5 zeigt das UV-VIS-Spektrum des Peroxokomplexes 14.

### Ausführungsbeispiel 10:

### Herstellung des Peroxokomplexes [Cu₂(Me₄apme)₂(O₂)](BPh₄)₂

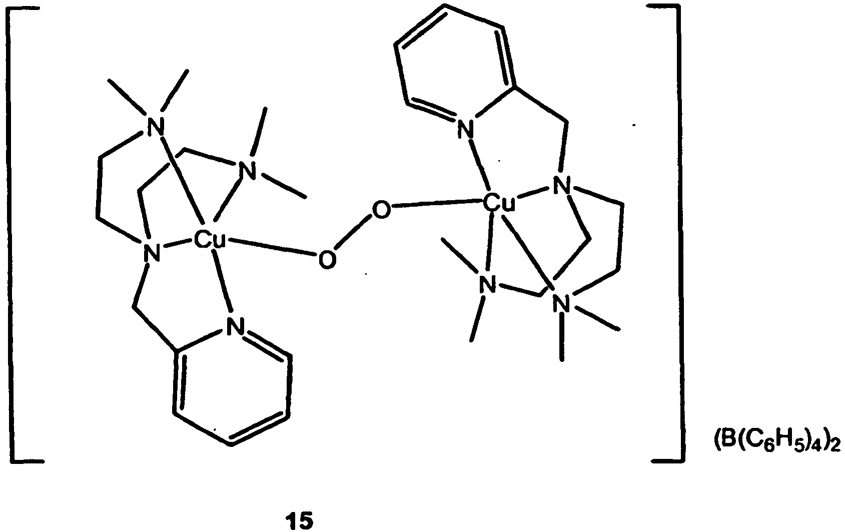

2 [Cu(Me₄apme)] BPh₄ + O₂ → [Cu₂(Me₄apme)₂(O₂)](BPh₄)₂

Der frisch hergestellte Cu(I)-Komplex **11** wurde als gelbes Pulver, unter Argon in einem verschlossenen Gefäß aus der Argon-Box geholt. Nach dem Öffnen des Gefäßes wurde der Cu(I)-Komplex mit Sauerstoffgas (Luft ist auch möglich) versetzt. Es bildet sich innerhalb Sekunden der intensiv blau gefärbte Peroxokomplex **15.**

### Alternative Darstellung:

Eine gelbe Lösung des Cu(I)-Komplex **11** in Aceton oder Acetonitril wurde, unter Argon in einem verschlossenen Gefäß, aus der Argon-Box geholt. Die Lösung wurde in einem Ethanolbad auf -80°C heruntergekühlt und mit Sauerstoffgas (Luft ist auch möglich) zur Reaktion gebracht. Es bildet sich innerhalb von Sekunden die intensiv blau gefärbte Peroxokomplex-Lösung. Durch die Zugabe von kaltem (-80°C) Diethylether fällt der Peroxokomplex als voluminöser Feststoff aus. Durch Filtration und Trocknung (mit Sauerstoffgas) bei -80°C kann der Peroxokomplex (15) schließlich raumtemperaturstabil isoliert werden.

Fig. 6 zeigt das UV-VIS-Spektrum des Peroxokomplexes **15.**

### Ausführungsbeispiel 11:

### Herstellung des Peroxokomplexes [Cu₂(Me₂uns-penp)₂(O₂)](BPh₄)₂

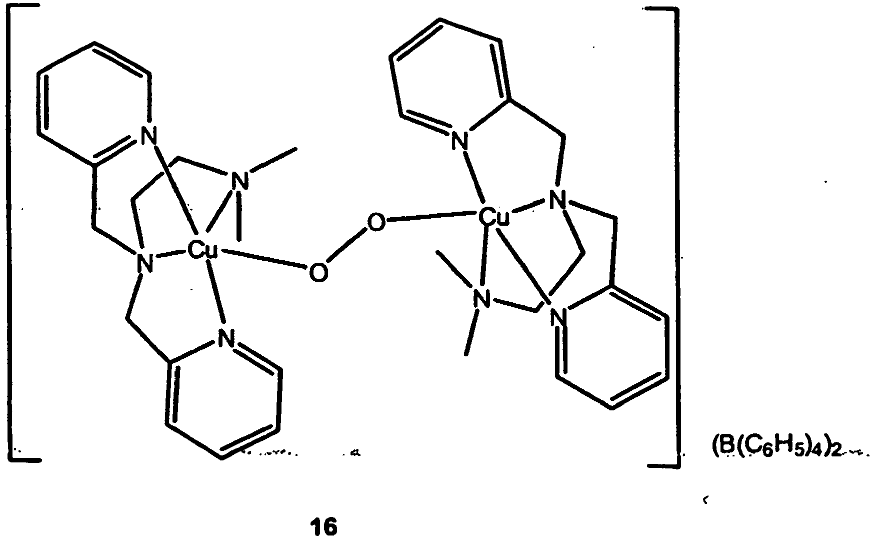

2 [Cu(Me₂uns-penp)] BPh₄ + O₂ **→** [Cu₂(Me₂uns-penp)₂(O₂)](BPh₄)₂

Eine gelbe Lösung des Cu(I)-Komplex **12** in Aceton oder Acetonitril wurde, unter Argon in einem verschlossenen Gefäß, aus der Argon-Box geholt. Die Lösung wurde in einem Ethanolbad auf -80°C heruntergekühlt und mit Sauerstoffgas (Luft ist auch möglich) zur Reaktion gebracht. Es bildet sich innerhalb von Sekunden die intensiv blau gefärbte Peroxokomplex-Lösung. Durch die Zugabe von kaltem (-80°C) Diethylether fällt der Peroxokomplex als voluminöser Feststoff aus. Durch Filtration und Trocknung (mit Sauerstoffgas) bei -80°C kann der Peroxokomplex (**16**) schließlich raumtemperaturstabil isoliert werden.

Fig. 7 zeigt das UV-VIS-Spektrum des Peroxokomplexes **16.**

### Ausführungsbeispiel 12:

### Herstellung des Peroxokomplexes [Cu₂(tmpa)₂(O₂)](BPh₄)₂

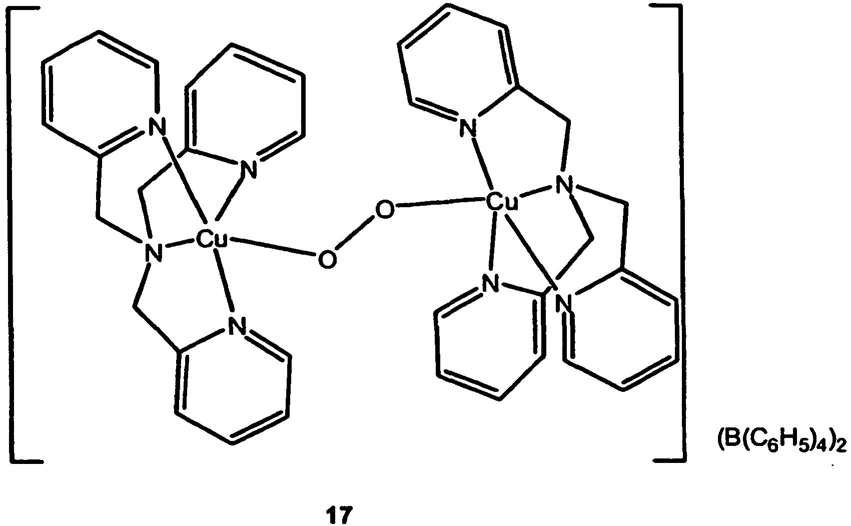

2 [Cu(tmpa)]BPh₄ + O₂ → [Cu₂(tmpa)₂(O₂)](BPh₄)₂

Der frisch hergestellte Cu(I)-Komplex **13** wurde als gelbes Pulver, unter Argon in einem verschlossenen Gefäß aus der Argon-Box geholt. Nach dem Öffnen des Gefäßes wurde der Cu(I)-Komplex mit Sauerstoffgas (Luft ist auch möglich) versetzt. Es bildet sich innerhalb Sekunden der intensiv blau gefärbte Peroxokomplex **17.**

### Alternative Darstellung:

Eine gelbe Lösung des Cu(I)-Komplex **17** in Aceton oder Acetonitril wurde, unter Argon in einem verschlossenen Gefäß, aus der Argon-Box geholt. Die Lösung wurde in einem Ethanolbad auf -80°C heruntergekühlt und mit Sauerstoffgas (Luft ist auch möglich) zur Reaktion gebracht. Es bildet sich innerhalb von Sekunden die intensiv blau gefärbte Peroxokomplex-Lösung. Durch die Zugabe von kaltem (-80°C) Diethylether fällt der Peroxokomplex als voluminöser Feststoff aus. Durch Filtration und Trocknung (mit Sauerstoffgas) bei -80°C kann der Peroxokomplex (17) schließlich raumtemperaturstabil isoliert werden.

Fig. 8 zeigt das UV-VIS-Spektrum des Peroxokomplexes 17.

### Ausführungsbeispiel 13:

### Oxidation von Benzol zu Phenol

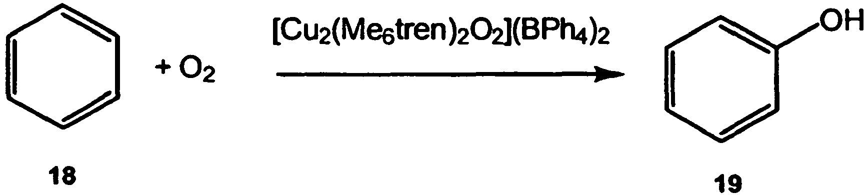

Für die Dauer von etwa zwei Tagen wird einem verschlossenen Glas der Katalysator mit Benzol und Sauerstoff bei Raumtemperatur zur Reaktion gebracht. Hierfür wird Benzol in kleines, offenes Glas gefüllt. In ein zweites, höheres und verschließbares Schraubdeckelglas wird [Cu₂(Me₆tren)₂O₂](BPh₄)₂ gegeben. Das kleinere, Benzol enthaltende Glas wird auf den Katalysator gestellt, der Gasraum mit Sauerstoff gefüllt und das größere Glas mit einem Schraubdeckel verschlossen.
Nach einiger Zeit kondensieren Benzoldämpfe an der Katalysatoroberfläche und reagieren zu Phenol. Nach zwei Tagen wird das mit Benzol gefüllte Glas entfernt und der Katalysator mit Diethylether gewaschen. In der etherischen Lösung kann mittels GC-MS Phenol nachgewiesen werden.
Fig. 9 zeigt die GC-Analyse der etherischen Lösung.
Fig. 10 zeigt die GC-MS-Analyse der etherischen Lösung.

### Abbildungslegenden

### Fig 1

Fig. 1 zeigt eine ORTEP-Darstellung von [Cu(Me₆tren)]BPh₄. Auf die Darstellung des Anions (Tetraphenylborat) und der Wasserstoffatome wurde aus Gründen der Übersichtlichkeit verzichtet. (thermische Ellipsoide mit 50% Aufenthaltswahrscheinlichkeit)

Die Aufnahme des Einkristalls wurde mittels Omega-Scan-Technik an einem Siemens SMART CCD 1000 Diffraktometer unter Verwendung von Mo K_{α}- Strahlung ([α] = 0,71073 Angström) und ein Graphit Monochromator durchgeführt. Zur Absorptionskorrektur wurde das Programm SADABS (Siemens Area Detector Absorption Correction, Siemens) verwendet. Zur Strukturlösung (Direkte Methoden) und Verfeinerung wurde das Programmpacket SHELX97 verwendet. Die Positionen aller Wasserstoffatome wurden geometrisch berechnet. Alle Nichtwasserstoffatome wurden anisotrop verfeinert.

### Fig. 2

Kristallstrukturanalyse von [Cu(Me₆tren)]BPh₄:
a) zeigt das Pulverdiffraktogramm des Pulvers,
b) zeigt das aus dem Einkristall simulierte Pulverdiffraktogramm

Die Aufnahme des Pulvers wurde mittels Kapillarentechnik an einem STOE Stadi-P Diffraktometer mit IP-PS (image plate position sensitive) -Detektor durchgeführt. Es wurde Cu K_{α}-Strahlung ([a] = 1,54056 Angström) und ein Germanium-Monochromator verwendet.

Zur Simulation des Pulverdiffraktogramms wurde der unter Fig.1 beschriebene Einkristall verwendet. Die Simulation wurde mit dem Programm PowderCell 2.4 vorgenommen.

### Fig. 3

Fig. 3 zeigt eine ORTEP-Darstellung von [Cu(Me₂uns-penp)]BPh₄. Auf die Darstellung des Anions (Tetraphenylborat) und der Wasserstoffatome wurde aus Gründen der Übersichtlichkeit verzichtet. (thermische Ellipsoide mit 50% Aufenthaltswahrscheinlichkeit)

Die Aufnahme des Einkristalls wurde mittels Mo K_{α}-Strahlung ([α] = 0,71096 Angström ) und ein Graphit Monochromator an einem STOE IPDS Diffraktometer mit angeschlossenem Tieftemperatursystem (Karlsruher Glastechnisches Werk) durchgeführt. Es wurde keine Absorptionskorrektur vorgenommen. Zur Strukturlösung (Direkte Methoden) und Verfeinerung wurde das Programmpacket SHELX97 verwendet. Die Positionen aller Wasserstoffatome wurde geometrisch berechnet. Alle Nichtwasserstoffatome wurden anisotrop verfeinert.

### Fig. 4:

Fig. **4** zeigt eine ORTEP-Darstellung von [Cu(tmpa)]BPh₄. Auf die Darstellung des Anions (Tetraphenylborat) und der Wasserstoffatome wurde aus Gründen der Übersichtlichkeit verzichtet. (thermische Ellipsoide mit 50% Aufenthaltswahr scheinlichkeit)

Die Aufnahme des Einkristalls wurde mittels Mo K_{α}-Strahlung ([α] = 0,71096 Angström ) und ein Graphit Monochromator an einem STOE IPDS Diffraktometer mit angeschlossenem Tieftemperatursystem (Karlsruher Glastechnisches Werk) durchgeführt. Es wurde keine Absorptionskorrektur vorgenommen. Zur Strukturlösung (Direkte Methoden) und Verfeinerung wurde das Programmpacket SHELX97 verwendet. Die Positionen aller Wasserstoffatome wurde geometrisch berechnet. Alle Nichtwasserstoffatome wurden anisotrop verfeinert.

### Fig. 5

UV-VIS-Spektrum des Peroxokomplexes [Cu₂(Me₆tren)₂(O₂)](BPh₄)₂. Das Spektrum zeigt die typische Cu-O₂-Charge-Transfer-Doppelbande.

| | |
|---|---|
| Temperatur: | -60 °C |
| Lösungsmittel: | Aceton |
| E: | Extinktion |
| λ: | Wellenlänge |

### Fig. 6

UV-VIS-Spektrum des Peroxokomplexes [Cu₂(Me₄apme)₂(O₂)](BPh₄)₂. Das Spektrum zeigt die typische Cu-O₂-Charge-Transfer-Doppelbande.

| | |
|---|---|
| Temperatur: | -60 °C |
| Lösungsmittel: | Aceton |
| E: | Extinktion |
| λ: | Wellenlänge |

### Fig. 7

UV-VIS-Spektrum des Peroxokomplexes [Cu₂(Me₂uns-penp)₂(O₂)](BPh₄)₂. Das Spektrum zeigt die typische Cu-O₂-Charge-Transfer-Doppelbande.

| | |
|---|---|
| Temperatur: | -80 °C |
| Lösungsmittel: | Aceton |
| E: | Extinktion |
| λ: | Wellenlänge |

### Fig. 8

UV-VIS-Spektrum des Peroxokomplexes [Cu₂(tmpa)₂(O₂)](BPh₄)₂. Das Spektrum zeigt die typische Cu-O₂-Charge-Transfer-Doppelbande.

| | |
|---|---|
| Temperatur: | 25 °C |
| Lösungsmittel: | Aceton |
| E: | Extinktion |
| λ: | Wellenlänge |

### Fig. 9

GC-Analyse der etherischen Lösung aus Ausführungsbeispiel 13.
GC-Gerät: Carlo Erba Instruments HRGC 530D Mega Series; Säule: UP5: Gasgemisch: Stickstoff/Luft; Gasdurchfluss: 200 ml/min
Das Signal für Phenol (**19**) wird bei einer Retentionszeit von 4,17 min. nachgewiesen.

### Fig. 10

GC-MS-Analyse der etherischen Lösung aus Ausführungsbeispiel 13.
GC-Gerät: HP 5890; Gasgemisch: Stickstoff/Luft; Gasdurchfluss: 200 ml/min; MS-Gerät: Quadrupol MS HP MSD 5971 (EI)

### Fig. 10a:

Im Gaschromatogramm wird Phenol (**19**) bei einer Retentionszeit von 5,98 min nachgewiesen.

| | |
|---|---|
| t [min]: | Retentionszeit in Minuten |
| A: | Abundance = Signalintensität |

### Fig. 10b:

Die MS-Analyse des Phenolpeaks zeigt das für Phenol typische Isotopenmuster.

| | |
|---|---|
| m/z: | Quotient aus Masse durch Ladung der detektierten Ionen |
| A: | Abundance = Signalintensität |

### Fig. 11

Resonanz Raman -Spektren der Peroxokomplexes
a) [Cu₂(Me₆tren)₂(O₂)](BPh₄)₂
b) [Cu₂(Me₄apme)₂(O₂)](BPh₄)₂
c) [Cu₂(Me₂uns-penp)₂(O₂)](BPh₄)₂
d) [Cu₂(tmpa)₂(O₂)](BPh₄)₂
Die Spektren der Feststoffmessungen zeigen die typischen Cu-O und O-O Streckschwingung [bei etwa 550 und 800 cm-¹.

| | |
|---|---|
| Anregungswellenlänge: | 568,2 nm |
| cm⁻¹: | Wellenzahlen |

## Patentansprüche

1. Kupfer-(II)-Sauerstoff-Adduktkomplexe der allgemeinen Formel 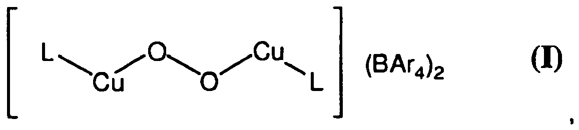 worin
BAr₄ für ein Tetraarylboratanion steht, ausgewählt aus Tetraphenylborat und Tetrakis(3,5-trifluoromethyl)phenylborat
und
L einen tripodalen tetradentaten Liganden darstellt, wobei
a) es sich bei jedem der vier Bindungsstellen des tripodalen tetradentaten Liganden um ein Stickstoffatom handelt, und
b) drei podale stickstoffhaltige Liganden an das zentrale Stickstoffatom gebunden sind, und
c) es sich bei dem tripodalen tetradentaten Liganden um einen Liganden der allgemeinen Formel 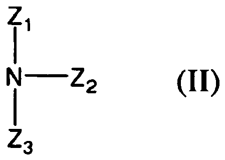 handelt, worin Z₁, Z₂ und Z₃ unabhängig voneinander ausgewählt sind und jeder dieser drei podalen stickstoffhaltigen Liganden unabhängig voneinander ein aliphatisches Amin oder einen stickstoffhaltigen Heteroaromaten umfasst, und
d) sich zwischen dem zentralen Stickstoffatom und dem Stickstoffatom jedes der podalen Liganden eine Brücke aus ein bis vier Kohlenstoffatomen befindet,
**dadurch gekennzeichnet, dass**
• falls es sich bei dem podalen Liganden um einen stickstoffhaltigen Heteroaromaten handelt, die Brücke aus ein bis vier Kohlenstoffatomen genau ein sp²-hybridisiertes Kohlenstoffatom enthält, wobei dieses sp²-hybridisierte Kohlenstoffatom Teil des heterocyclischen Aromaten ist und sich in 2-Stellung zu mindestens einem Stickstoffatom des heterocyclischen Ringes befindet, oder
• falls es sich bei dem podalen Liganden um ein aliphatisches Amin handelt, die Brücke aus ein bis vier Kohlenstoffatomen ausschließlich sp³-hybridisierte aliphatische Kohlenstoffatome enthält, und das aliphatische Amin an eine Alkylengruppe aus ein bis vier Kohlenstoffatomen gebunden ist gemäß Formel 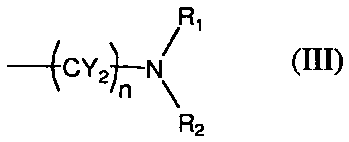
wobei
Y, n, R₁ und R₂ folgende Bedeutungen haben und für jede Gruppe Z₁, Z₂ und Z₃ unabhängig voneinander ausgewählt werden können:
Y = H oder F,
n=1,2,3,4,
und R₁ und R₂ sind unabhängig voneinander ausgewählt aus
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CF(CF₃)₂, C(CF₃)₃,
- wobei für den Fall, dass eine der beiden Gruppen R₁ oder R₂ -C(CH₃)₃ oder -C(CF₃)₃ darstellt, die andere Gruppe R₁ oder R₂ ausgewählt wird aus -H, -CH₃ und CF₃
- Phenyl, Pentafluorphenyl, Methylphenyl, Dimethylphenyl, Trifluormethylphenyl, (Bis-trifluormethyl)phenyl.

2. Kupfer-(II)-Sauerstoff-Adduktkomplexe gemäß Anspruch 1, **dadurch gekennzeichnet, dass** es sich bei dem tripodalen tetradentaten Liganden um einen Liganden der allgemeinen Formel 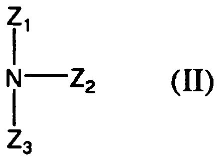 handelt, worin Z₁, Z₂ und Z₃ unabhängig voneinander ausgewählt sind aus
- einem aliphatischen Amin, das an eine Alkylengruppe aus ein bis vier Kohlenstoffatomen gebunden ist gemäß Formel 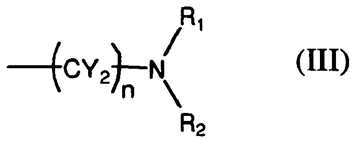
- und einem stickstoffhaltigen Heteroaromaten, welcher in 2-Stellung zu mindestens einem seiner Stickstoffatome an eine Alkylengruppe aus null bis drei Kohlenstoffatomen gebunden ist gemäß 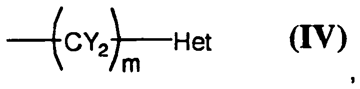 so dass das aromatische sp²-hybridisierte Kohlenstoffatom, welches sich in 2-Stellung zu mindestens einem Stickstoffatom des Heteroaromaten befindet, gemeinsam mit der Alkylengruppe -(CY₂)ₘ- eine Brücke aus einem bis vier Kohlenstoffatomen zwischen dem zentralem Stickstoffatom des Liganden L und dem mindestens einen Stickstoffatom des Heteroaromaten bildet,
wobei
Y, n, m, R₁, R₂ und Het folgende Bedeutungen haben und für jede Gruppe Z₁, Z₂ und Z₃ unabhängig voneinander ausgewählt werden können:
Y = H oder F,
n = 1, 2, 3, 4,
m = 0, 1, 2, 3,
und R₁ und R₂ sind unabhängig voneinander ausgewählt aus
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CF(CF₃)₂, C(CF₃)₃,
- wobei für den Fall, dass eine der beiden Gruppen R₁ oder R₂ -C(CH₃)₃ oder -C(CF₃)₃ darstellt, die andere Gruppe R₁ oder R₂ ausgewählt wird aus -H, -CH₃ und CF₃
- Phenyl, Pentafluorphenyl, Methylphenyl, Dimethylphenyl, Trifluormethylphenyl, (Bis-trifluormethyl)phenyl,
und Het ist ein stickstofthaltiger Heteroaromat, ausgewählt aus

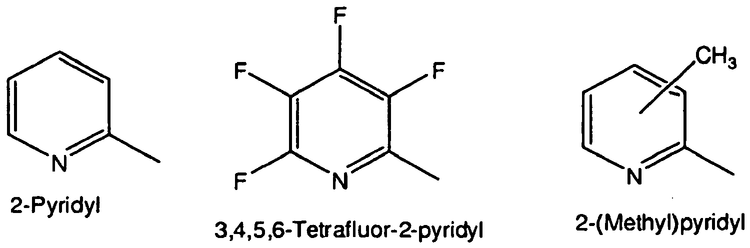

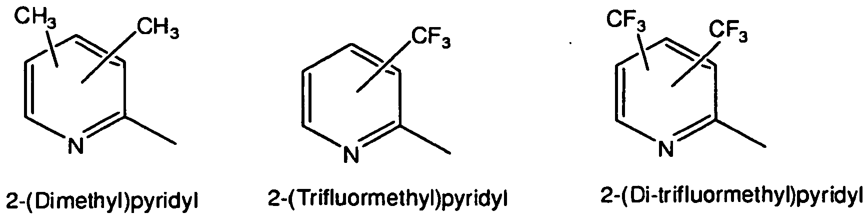

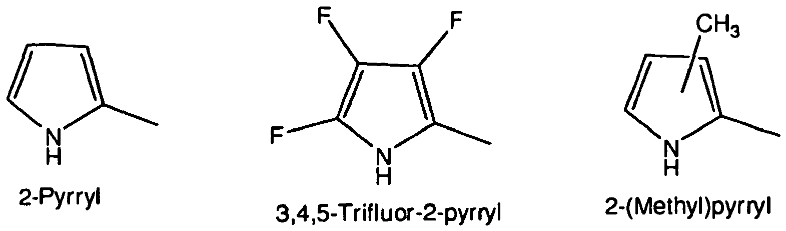

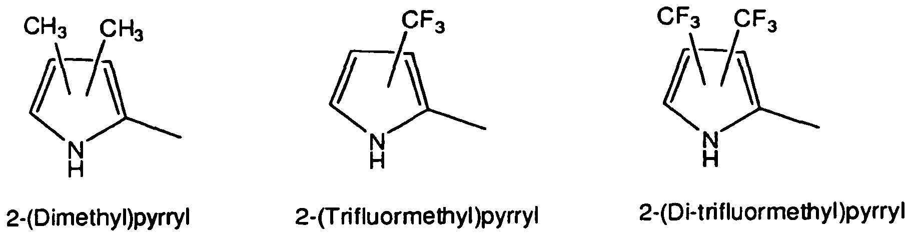

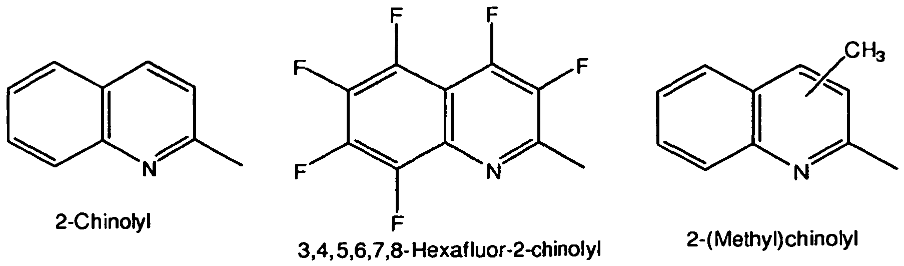

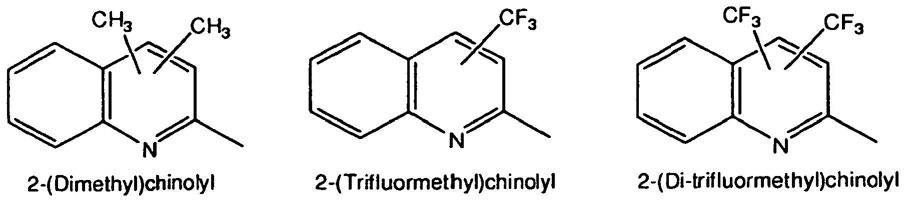

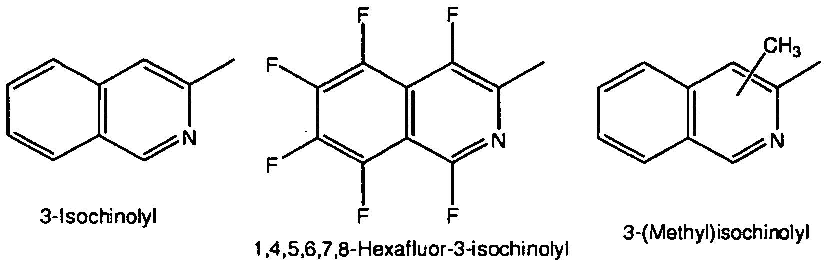

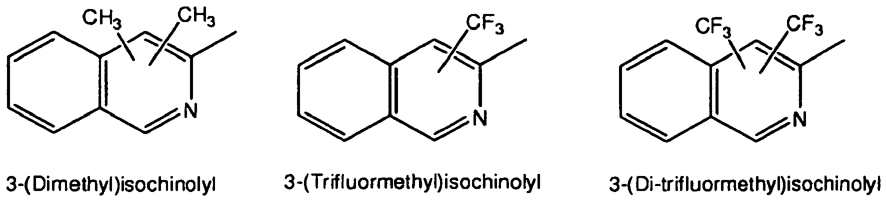

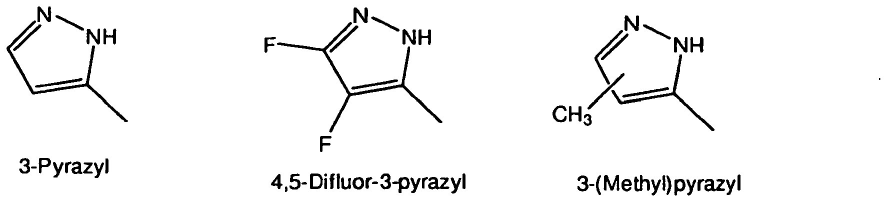

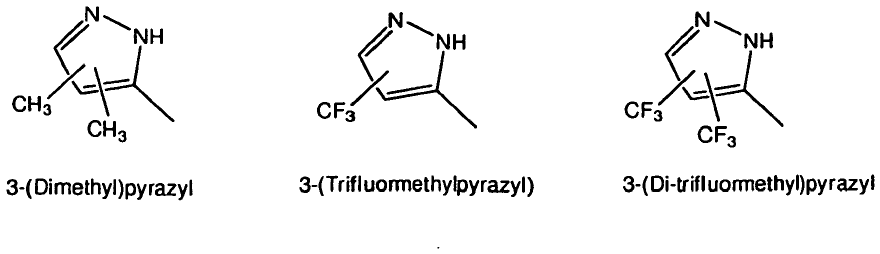

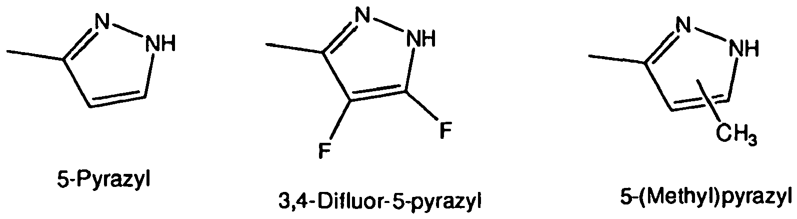

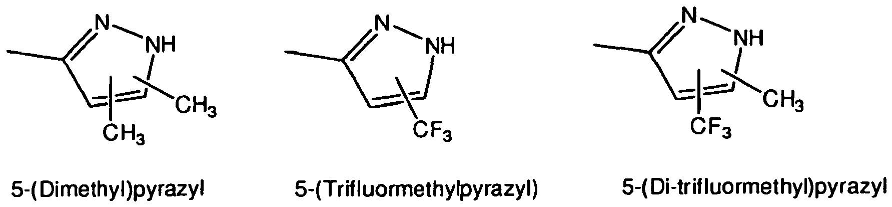

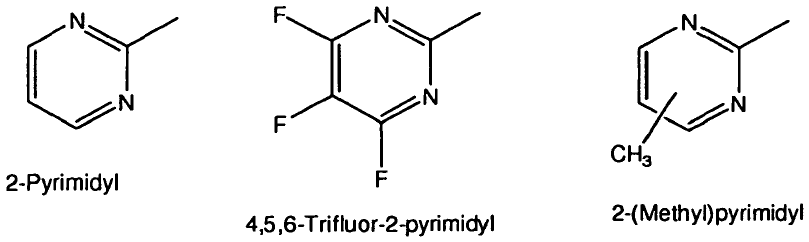

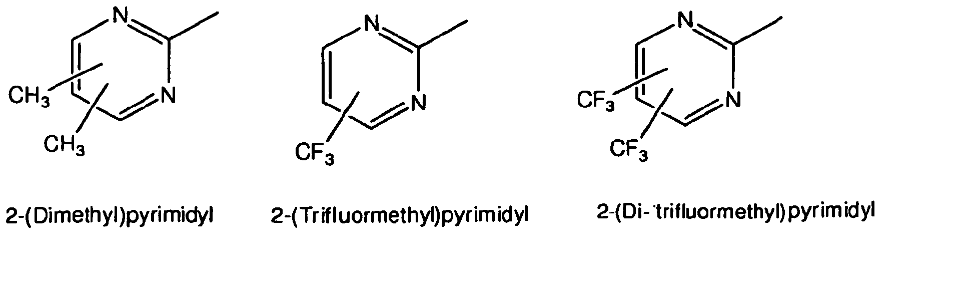

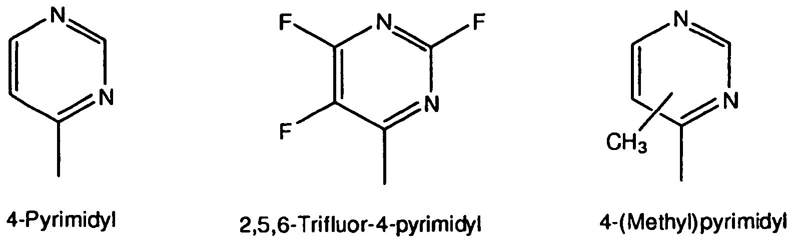

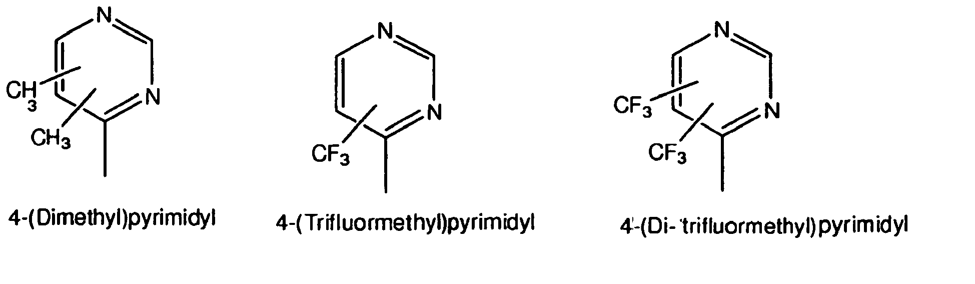

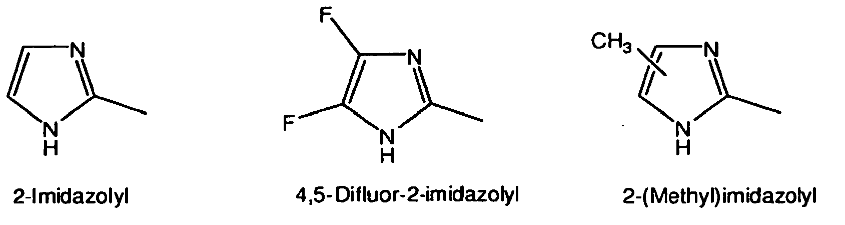

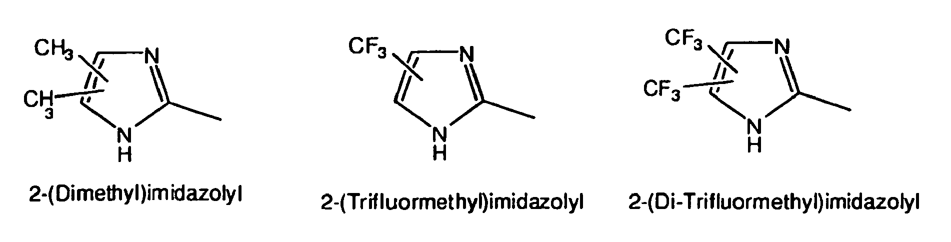

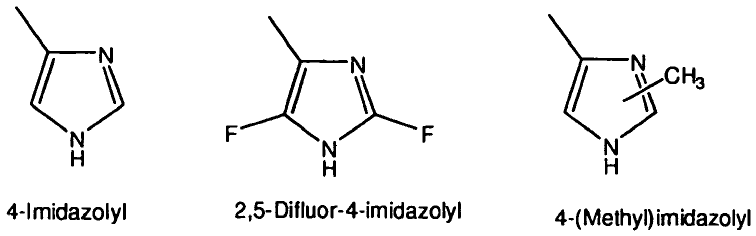

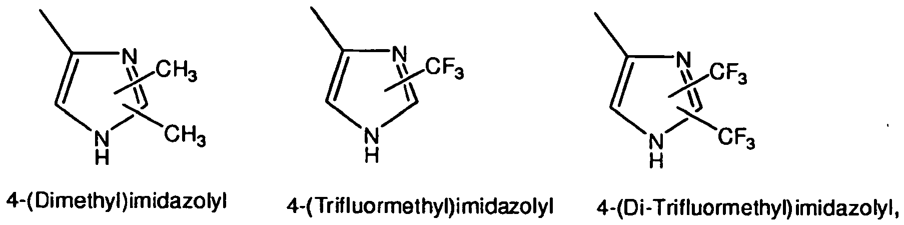

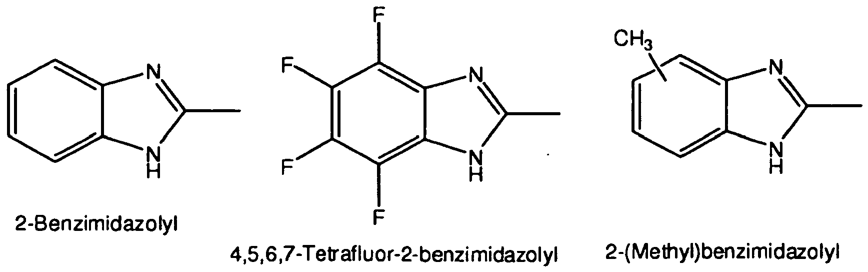

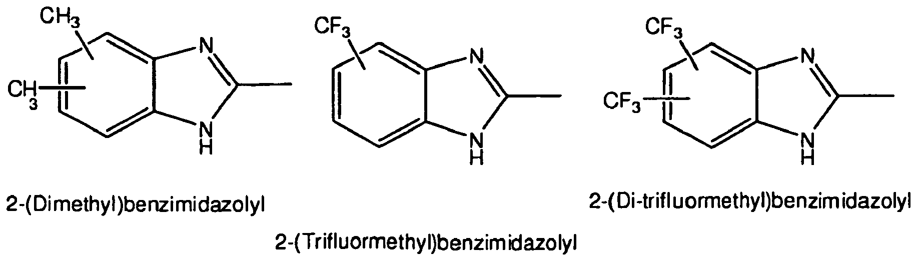

3. Kupfer-(II)-Sauerstoff-Adduktkomplexe gemäß einem der Ansprüche 1 oder 2, wobei im tripodalen tetradentaten Liganden L 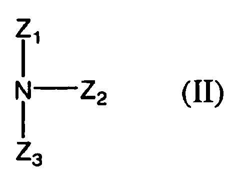
Z₁, Z₂ und Z₃ unabhängig voneinander ausgewählt sind aus
- einem aliphatischen Amin, das an einen Alkylengruppe aus ein bis vier Kohlenstoffatomen gebunden ist gemäß Formel 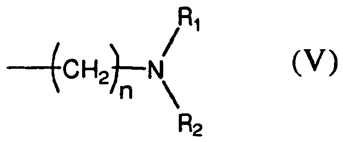 und
- einem stickstoffhaltigen Heteroaromaten, welcher in 2-Stellung zu mindestens einem seiner Stickstoffatome an eine Alkylengruppe aus null bis drei Kohlenstoffatomen gebunden ist gemäß Formel 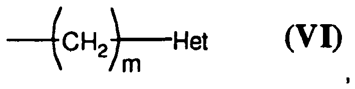
worin n, m, R₁, R₂ und Het für jede Gruppe Z₁, Z₂ und Z₃ unabhängig voneinander gewählt werden können und die in Anspruch 2 aufgeführten Bedeutungen haben, und wobei für den Fall, dass eine der beiden Gruppen R₁ oder R₂ -C(CH₃)₃ oder -C(CF₃)₃ darstellt, die andere Gruppe R₁ oder R₂ ausgewählt wird aus -H, -CH₃ und CF₃.

4. Kupfer-(II)-Sauerstoff-Adduktkomplexe gemäß einem der Ansprüche 1 bis 3, wobei im tripodalen tetradentaten Liganden L 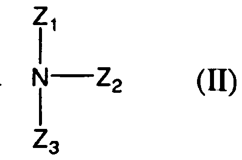 Z₁, Z₂ und Z₃ unabhängig voneinander ausgewählt sind aus
- einem aliphatischen Amin, das an einen Alkylengruppe aus zwei Kohlenstoffatomen gebunden ist gemäß Formel 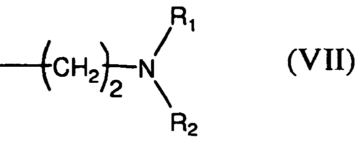 und
- einem stickstoffhaltigen Heteroaromaten, welcher in 2-Stellung zu mindestens einem seiner Stickstoffatome an eine Methylengruppe gebunden ist gemäß Formel
-CH₂-Het **(VIII)**
worin R₁, R₂ und Het für jede Gruppe Z₁, Z₂ und Z₃ unabhängig voneinander gewählt werden können und die in Anspruch 2 aufgeführten Bedeutungen haben, und wobei für den Fall, dass eine der beiden Gruppen R₁ oder R₂ -C(CH₃)₃ oder -C(CF₃)₃ darstellt, die andere Gruppe R₁ oder R₂ ausgewählt wird aus -H, -CH₃ und CF₃.

5. Kupfer-(II)-Sauerstoff-Adduktkomplexe gemäß einem der Ansprüche 1 bis 4, wobei im tripodalen tetradentaten Liganden L 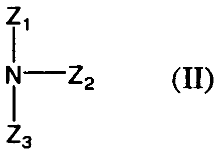 Z₁, Z₂ und Z₃ unabhängig voneinander ausgewählt sind aus
- einem aliphatischen Amin, das an eine Alkylengruppe aus zwei Kohlenstoffatomen gebunden ist gemäß Formel 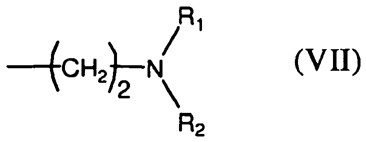 und
- einem stickstoflhaltigen Heteroaromaten, welcher in 2-Stellung zu mindestens einem seiner Stickstoffatome an eine Methylengruppe gebunden ist gemäß Formel
-CH₂-Het **(VIII),**
worin R₁, R₂ ausgewählt sind aus
-H, -CH₃, -CH₂CH₃, -CH₂CH₂CH₃, -CH(CH₃)₂, C(CH₃)₃,
wobei für den Fall, dass eine der beiden Gruppen R₁ oder R₂ -C(CH₃)₃ darstellt, die andere Gruppe R₁ oder R₂ ausgewählt wird aus -H und -CH₃,
und
Het ausgewählt ist aus
2-Pyridyl, 2-Pyrryl, 2-Chinolyl, 3-Isochinolyl, 3-Pyrazyl, 5-Pyrazyl, 2-Pyrimidyl, 4-Pyrimidyl, 2-Imidazolyl, 4-Imidazolyl, 2-Benzimidazolyl.

6. Kupfer-(II)-Sauerstoff-Adduktkomplexe gemäß einem der Ansprüche 1 bis 5, **dadurch gekennzeichnet. dass** der tripodale tetradentate Ligand L ausgewählt ist aus der Gruppe Tris-(2-dimethylaminoethyl)-amin, Bis-[2-dimethylaminoethyl-(2-pyridylmethyl)]-amin, [(2-Dimethylaminoethyl)-bis-(2-pyridylmethyl)]-amin, Tris-[(2-pyridyl)-methyl]-amin.

7. Kupfer-(II)-Sauerstoff-Adduktkomplexe gemäß einem der Ansprüche 1 bis 6, **dadurch gekennzeichnet, dass** BAr₄ für Tetraphenylborat steht.

8. Verfahren zur Herstellung von Kupfer-(II)-Sauerstoff-Adduktkomplexen der allgemeinen Formel [L-Cu-O-O-Cu-L](BAr₄)₂ gemäß einem der Ansprüche 1 bis 7, **gekennzeichnet durch** die Schritte:
a) Komplexierung des Liganden L mit einer Cu-(I)-Verbindung [Cu(R₃)₄]X zum Cu-(I)-Komplex [Cu-L]X in einem polar aprotischen Lösungsmittel unter Schutzgasatmosphäre, wobei
- R₃ Acetonitril oder kein Atom darstellt und
- für den Fall, dass R₃ Acetonitril darstellt, X ausgewählt wird aus Hexafluorophosphat PF₆⁻, Tetrafluoroborat BF₄⁻, Perchlorat ClO₄⁻, Hexafluoroantimonat SbF₆⁻, Triflat SO₃CF₃⁻, Tetraphenylborat BPh₄⁻ und Tetrakis(3,5-trifluoromethyl)tetraphenylborat,
- sowie für den Fall, dass R₃ kein Atom darstellt, X ausgewählt wird aus Chlorid Cl⁻, Bromid Br und Iodid I⁻
b) Austausch des Anions X des Cu-(I)-Komplexes [Cu-L]X **durch** Tetraarylborat in einem polar aprotischen Lösungsmittel unter Schutzgasatmosphäre,
c) in Kontakt bringen des nach Durchführung von Schritt b) erhaltenen [Cu-L]-Tetraarylborats mit einer sauerstoffhaltigen Atmosphäre,
d) Isolierung und Trocknung des nach Durchführung von Schritt c) erhaltenen Komplexes [L-Cu-O-O-Cu-L](BAr₄)₂., wobei Isolierung und Trocknung bei tiefen Temperaturen < -70 °C erfolgen und die Trocknung im Sauerstoffstrom erfolgt.

9. Verfahren zur Herstellung von Kupfer-(II)-Sauerstoff-Adduktkomplexen der allgemeinen Formel [L-Cu-O-O-Cu-L](BAr₄)₂ gemäß einem der Ansprüche 1 bis 7, **gekennzeichnet durch** die Schritte,
a) Umsetzung des Liganden L in einem polar aprotischen Lösungsmittel unter Schutzgasatmosphäre mit einem Salz [Cu(R₃)₄]X unter Schutzgasatmosphäre zum entsprechenden [Cu-(I)-L]-Komplex, wobei
- R₃ Acetonitril oder kein Atom darstellt und
- für den Fall, dass R₃ Acetonitril darstellt, so wird das Anion X ausgewählt aus Hexafluorophosphat PF₆⁻, Tetrafluoroborat BF₄⁻, Perchlorat ClO₄⁻ , Hexafluoroantimonat SbF₆⁻, Triflat SO₃CF₃⁻, Tetraphenylborat BPh₄⁻ und Tetrakis(3,5-trifluoromethyl)tetraphenylborat,
- für den Fall, dass R₃ kein Atom darstellt, so wird X ausgewählt aus Chlorid Cl⁻, Bromid Br⁻ und Iodid I⁻
b) Umsetzung der aus Schritt a) erhaltenen Lösung des Komplexes von [L-Cu-(I)]X mit einer Lösung des Metall-Tetraarylborats unter Schutzgasatmosphäre,
c) isolieren und trocknen des aus Schritt b) erhaltenen Produkts [L-Cu-(I)]BAr₄, wobei die Trocknung unter Schutzgasatmosphäre erfolgt,
d) aussetzen des in c) isolierten und getrockneten Feststoffs gegenüber einer sauerstoffhaltigen Atmosphäre zur Bildung des Cu-(II)-Peroxo-Adduktkomplexes [L-Cu-O-O-Cu-L](BAr₄)₂.

10. Verfahren zur Herstellung von Kupfer-(II)-Sauerstoff-Adduktkomplexen der allgemeinen Formel [L-Cu-O-O-Cu-L](BAr₄)₂ gemäß einem der Ansprüche 1 bis 7, **dadurch gekennzeichnet, dass**
- der Ligand L in einem polar aprotischen Lösungsmittel unter Schutzgasatmosphäre mit einem Salz [Cu(R₃)₄]X zum entsprechenden [Cu-(I)-L]-Komplex komplexiert wird, wobei es sich bei der zur Komplexierung des Liganden L verwendeten Verbindung [Cu(R₃)₄]X um [Cu(CH₃CN)₄]BAr₄ handelt, und
- entweder das Produkt [L-Cu-(I)]BAr₄ isoliert und getrocknet wird, wobei die Trocknung unter Schutzgasatmosphäre erfolgt, und der isolierte und getrocknete Feststoff anschließend gegenüber einer sauerstoffhaltigen Atmosphäre zur Bildung des Cu-(II)-Peroxo-Adduktkomplexes [L-Cu-O-0-Cu-L](BAr₄)₂ ausgesetzt wird,
- oder, das [Cu-L]-Tetraarylborat zunächst mit einer sauerstoffhaltigen Atmosphäre in Kontakt gebracht, und anschließend der dadurch erhaltene Komplexes [L-Cu-O-O-Cu-L](BAr₄)₂ isoliert und getrocknet wird, wobei Isolierung und Trocknung bei tiefen Temperaturen < -70 °C erfolgen und die Trocknung im Sauerstoffstrom erfolgt.

11. Verfahren zur Herstellung von Kupfer-(II)-Sauerstoff-Adduktkomplexen der allgemeinen Formel [L-Cu-O-O-Cu-L](BAr₄)₂ gemäß einem der Ansprüche 8 bis 10, **dadurch gekennzeichnet, dass** das polar aprotische Lösungsmittel ausgewählt wird aus Aceton, Acetonitril und Propionitril.

12. Verfahren zur Herstellung von Kupfer-(II)-Sauerstoff-Adduktkomplexen der allgemeinen Formel [L-Cu-O-O-Cu-L](BAr₄)₂ gemäß einem der Ansprüche 8 bis 11, **dadurch gekennzeichnet, dass** die in Schritt c) verwendete sauerstoffhaltige Atmosphäre ausgewählt ist aus Sauerstoffgas, Luft oder einem Sauerstoff-Luft-Gemisch.

13. Verwendung von Kupfer-(II)-Sauerstoff-Adduktkomplexen gemäß einem der Ansprüche 1 bis 7 als Oxidationskatalysatoren.

14. Verwendung von Kupfer-(II)-Sauerstoff-Adduktkomplexen gemäß einem der Ansprüche 1 bis 7 als Katalysator für die Oxidation von Benzol zu Phenol, Methan zu Methanol, für die Oxidation von Wasserstoff, aromatischen und aliphatischen, gesättigten und ungesättigten Kohlenwasserstoffen.

15. Verwendung von Kupfer-(II)-Sauerstoff-Adduktkomplexen gemäß einem der Ansprüche 1 bis 7 als Katalysator für die Oxidation von Benzol zu Phenol.

## Claims

1. Copper-(II)-oxygen adduct complexes of the general formula 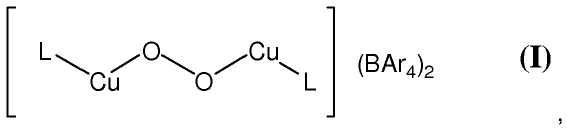 wherein
BAr₄ stands for a tetraarylborate anion, selected from tetraphenylborate and tetrakis(3,5-trifluoromethyl)phenylborate
and
L represents a tripodal tetradentate ligand, wherein
a) each of the four binding sites of the tripodal tetradentate ligand is a nitrogen atom, and
b) three podal nitrogen-containing ligands are bound to the central nitrogen atom, and
c) the tripodal tetradentate ligand is a ligand of the general formula 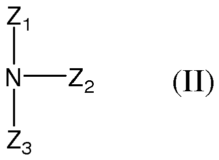 wherein Z₁, Z₂ and Z₃ are selected independently from each other, and each of the three podal, nitrogen-containing ligands comprises, independently from each other, an aliphatic amine or a nitrogen-containing heteroaromatic compound, and
d) a bridge comprising one to four carbon atoms is located between the central nitrogen atom and the nitrogen atom of each of the podal ligands,
**wherein**
• if the podal ligand is a nitrogen-containing heteroaromatic compound, the bridge of one to four carbon atoms comprises exactly one sp²-hybridised carbon atom, wherein this sp²-hybridised carbon atom is part of the heterocyclic aromatic compound and is located in the 2-position to at least one nitrogen atom of the heterocyclic ring, or
• if the podal ligand is an aliphatic amine, the bridge of one to four carbon atoms exclusively comprises sp³-hybridised aliphatic carbon atoms, and the aliphatic amine is bonded to an alkylene group of one to four carbon atoms of the formula 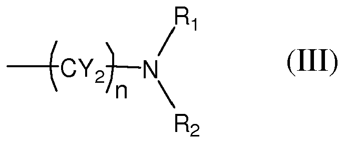
wherein
Y, n, R₁ and R₂ have the following meanings and are suitable to be selected independently from one another for each of the groups Z₁, Z₂ and Z₃:
Y = H or F,
n = 1, 2, 3, 4,
and R₁ and R₂ are selected independently from one another from
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CF(CF₃)₂, C(CF₃)₃,
- wherein, in case one of the two groups R₁ or R₂ represents -C(CH₃)₃ or -C(CF₃)₃ the other group R₁ or R₂ is selected from -H, -CH₃ and CF₃
- phenyl, pentafluorophenyl, methylphenyl, dimethylphenyl, trifluoromethylphenyl, bis(trifluoromethyl)phenyl.

2. Copper-(II)-oxygen adduct complexes according to claim 1, **wherein** the tripodal tetradentate ligand is a ligand of the general formula 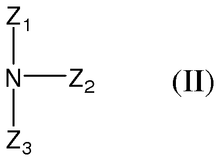 wherein Z₁, Z₂ and Z₃ are selected independently from one another from
- an aliphatic amine, which is bound to an alkylene group of one to four carbon atoms according to the formula 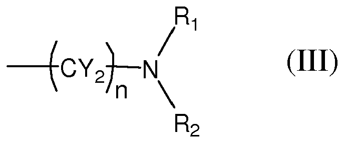
- and a nitrogen-containing heteroaromatic compound, which is bound in the 2-position to at least one of its nitrogen atoms to an alkylene group of zero to three carbon atoms according to 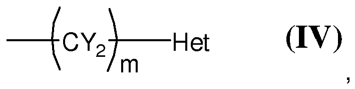 so that the aromatic sp²-hybridised carbon atom, which is located in the 2-position to at least one nitrogen atom of the heteroaromatic compound, forms, together with the alkylene group -(CY₂)ₘ-, a bridge of one to four carbon atoms between the central nitrogen atom of the ligand L and the at least one nitrogen atom of the heteroaromatic compound,
wherein
Y, n, m, R₁, R₂ and Het have the following meanings and are suitable for being selected independently from one another for each of the groups Z₁, Z₂ and Z₃:
Y = H or F,
n = 1 , 2, 3, 4,
m = 0, 1, 2, 3,
and R₁ and R₂ are selected independently from one another from
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CF(CF₃)₂, C(CF₃)₃,
- wherein, in case one of the two groups R₁ or R₂ represents -C(CH₃)₃ or -C(CF₃)₃, the other group R₁ or R₂ is selected from -H, -CH₃ and CF₃,
- phenyl, pentafluorophenyl, methylphenyl, dimethylphenyl, trifluoromethylphenyl, bis(trifluoromethyl)phenyl,
and Het is a nitrogen-containing heteroaromatic compound selected from

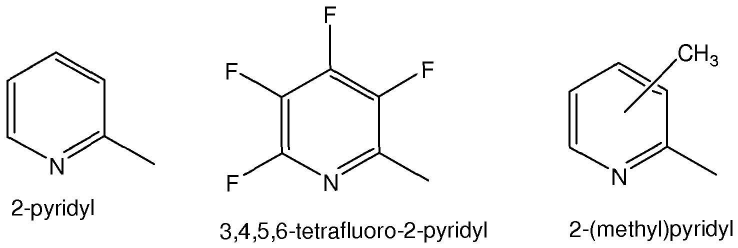

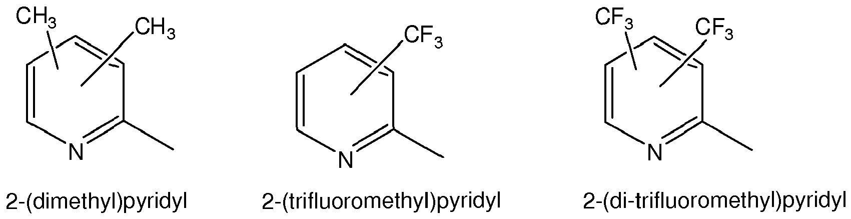

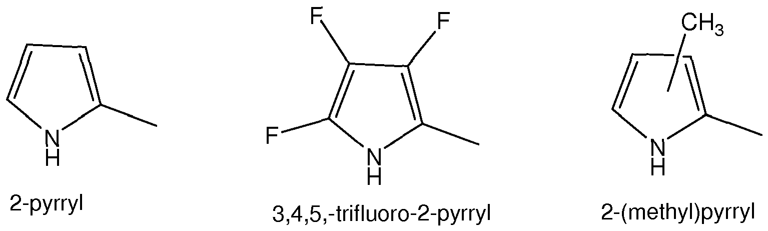

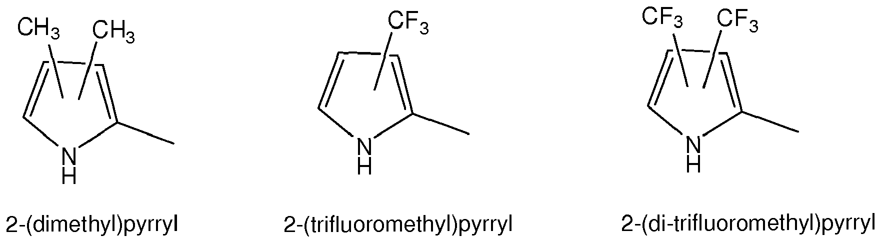

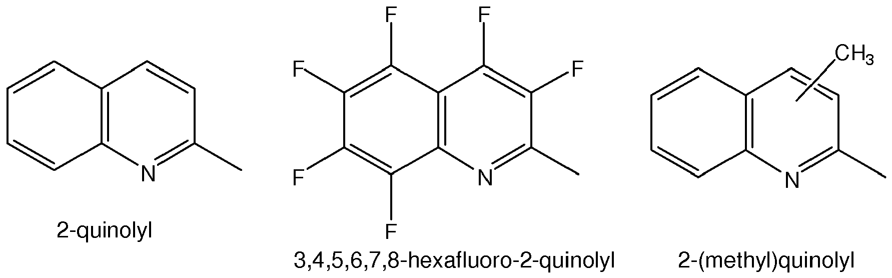

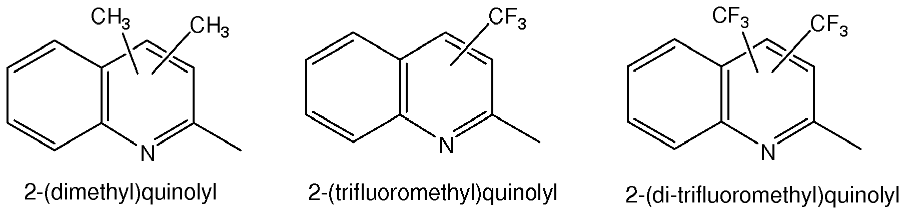

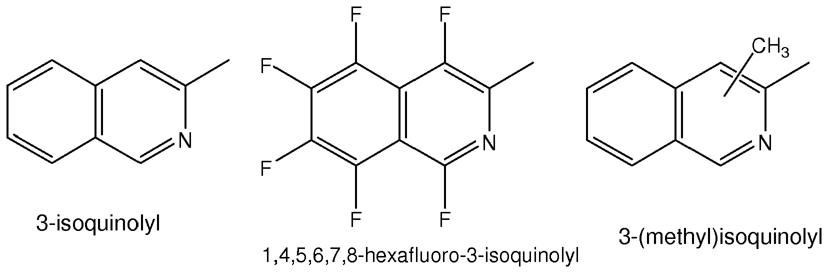

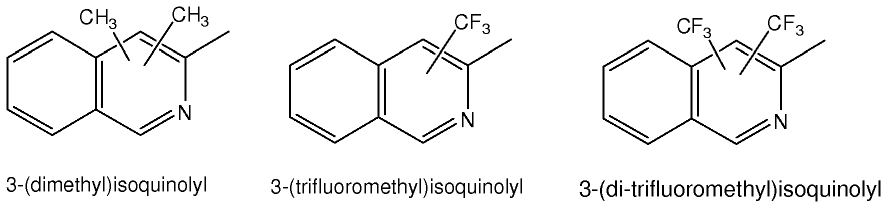

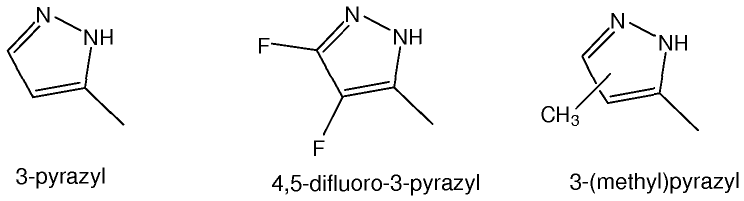

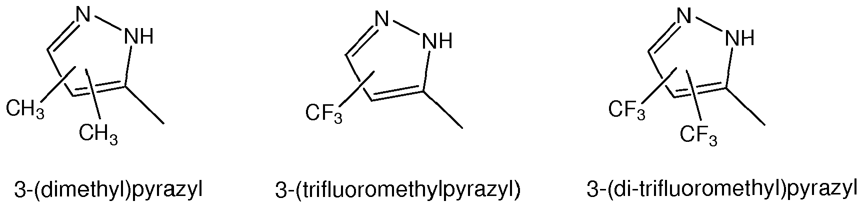

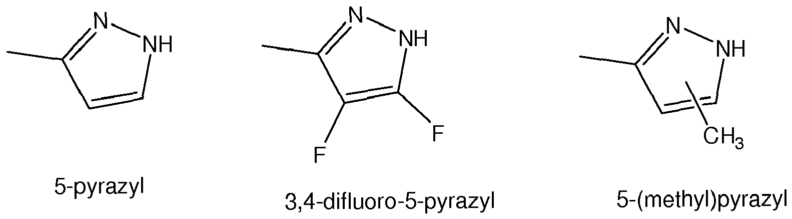

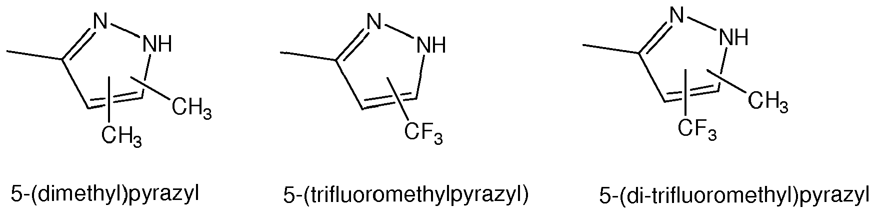

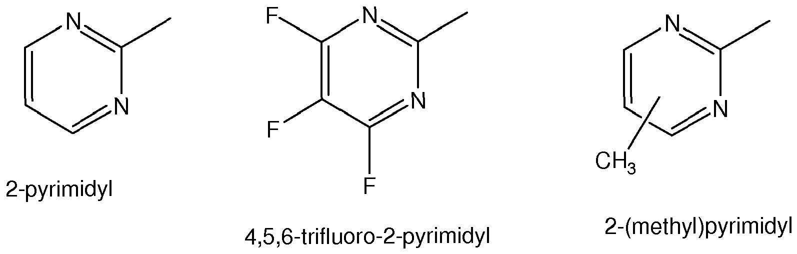

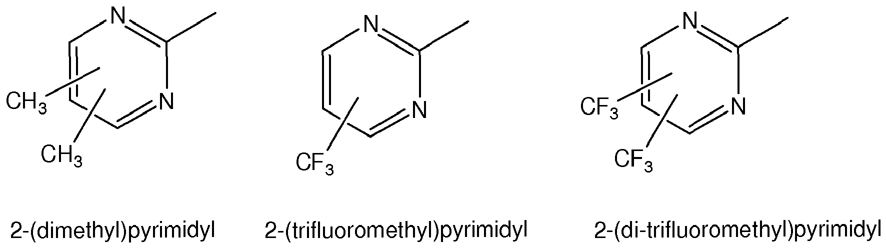

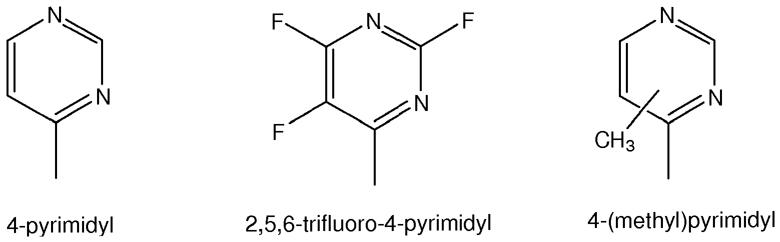

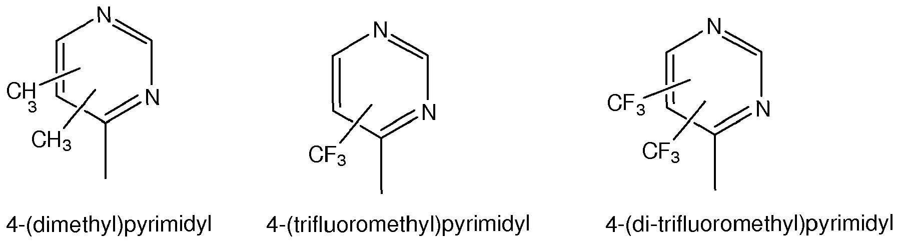

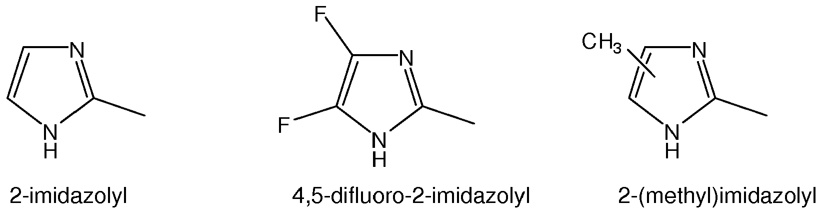

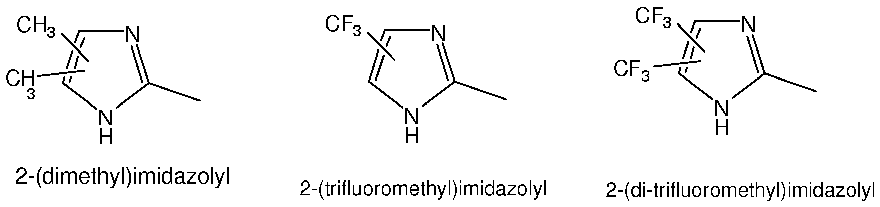

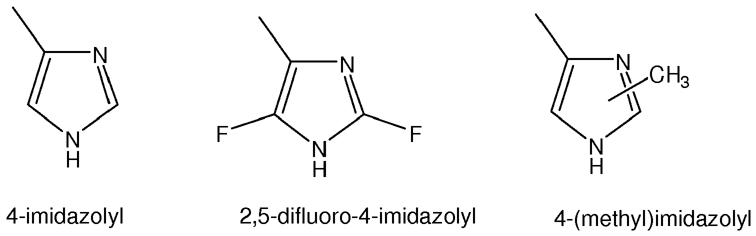

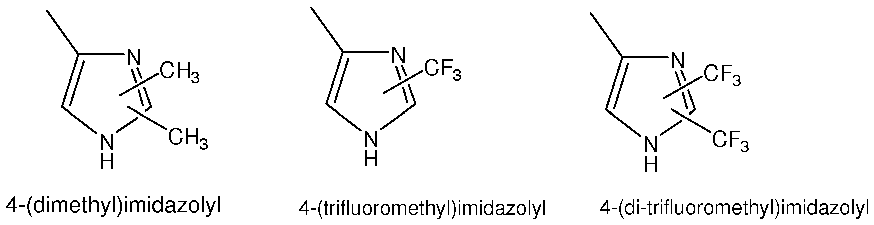

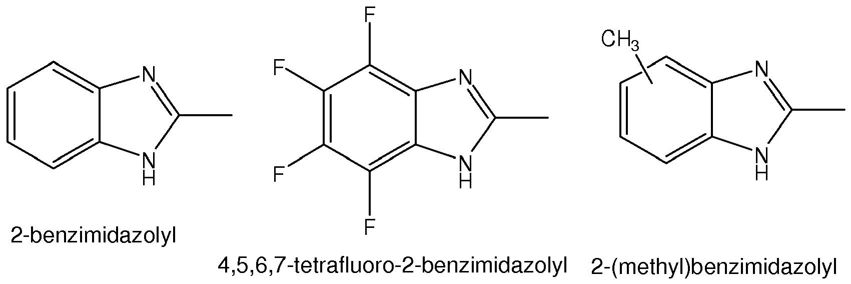

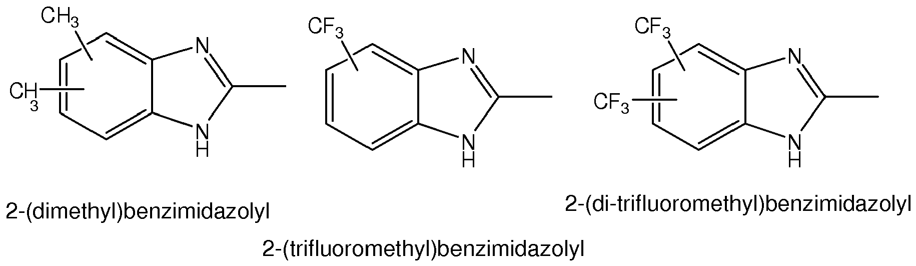

3. Copper-(II)-oxygen adduct complexes according to one of the claims 1 or 2, wherein in the tripodal tetradentate ligand L 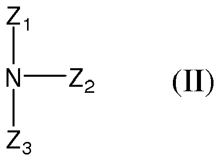 Z₁, Z₂ and Z₃ are selected independently from one another from
- an aliphatic amine, which is bound to an alkylene group of one to four carbon atoms according to the formula 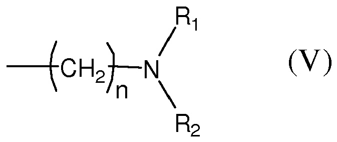 and
- a nitrogen-containing heteroaromatic compound, which is bound in the 2-position to at least one of its nitrogen atoms to an alkylene group of zero to three carbon atoms according to the formula 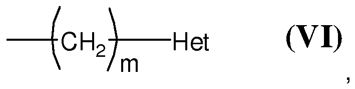
wherein n, m, R₁, R₂ and Het are suitable to be selected independently from one another for each of the groups Z₁, Z₂ and Z₃ and have the meanings mentioned in claim 2, and wherein, in case one of the two groups R₁ or R₂ represents -C(CH₃)₃ or -C(CF₃)₃, the other group R₁ or R₂ is selected from -H, -CH₃ and CF₃.

4. Copper-(II)-oxygen adduct complexes according to one of the claims 1 to 3, wherein in the tripodal tetradentate ligand L 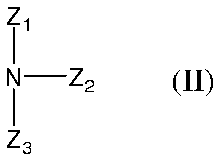 Z₁, Z₂ and Z₃ are selected independently from one another from
- an aliphatic amine, which is bound to an alkylene group of two carbon atoms according to the formula 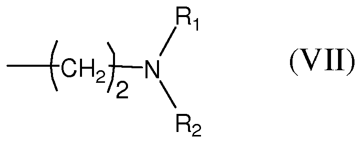 and
- a nitrogen-containing heteroaromatic compound, which is bound in the 2-position to at least one of its nitrogen atoms to a methylene group according to the formula
-CH₂-Het **(VIII),**
wherein R₁, R₂ and Het are suitable to be selected independently of one another for each of the groups Z₁, Z₂ and Z₃ and have the meanings mentioned in claim 2, and wherein, in case one of the two groups R₁ or R₂ represents -C(CH₃)₃ or -C(CF₃)₃, the other group R₁ or R₂ is selected from -H, -CH₃ and CF₃.

5. Copper-(II)-oxygen adduct complexes according to one of the claims 1 to 4, wherein in the tripodal tetradentate ligand L 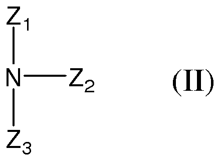 Z₁, Z₂ and Z₃ are selected independently from one another from
- an aliphatic amine, which is bound to an alkylene group of two carbon atoms according to the formula 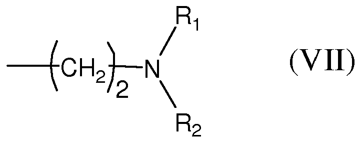 and
- a nitrogen-containing heteroaromatic compound, which is bound in the 2-position to at least one of its nitrogen atoms to a methylene group according to the formula
-CH₂-Het **(VIII)**,
wherein R₁, R₂ are selected from
-H, -CH₃, -CH₂CH₃, -CH₂CH₂CH₃, -CH(CH₃)₂, C(CH₃)₃,
wherein, in case one of the two groups R₁ or R₂ represents -C(CH₃)₃, the other group R₁ or R₂ is selected from -H and -CH₃,
and
Het is selected from
2-pyridyl, 2-pyrryl, 2-quinolyl, 3-isoquinolyl, 3-pyrazyl, 5-pyrazyl, 2-pyrimidyl, 4-pyrimidyl, 2-imidazolyl, 4-imidazolyl, 2-benzimidazolyl.

6. Copper-(II)-oxygen adduct complexes according to one of the claims 1 to 5, wherein the tripodal tetradentate ligand L is selected from the group tris-(2-dimethylaminoethyl)-amine, bis-[2-dimethylaminoethyl-(2-pyridylmethyl)]-amine, [(2-dimethylaminoethyl)-bis-(2-pyridylmethyl)]-amine, tris-[(2-pyridyl)-methyl]-amine.

7. Copper-(II)-oxygen adduct complexes according to one of the claims 1 to 6, wherein BAr₄ stands for tetraphenylborate.

8. Method for the production of copper-(II)-oxygen adduct complexes of the general formula [L-Cu-O-O-Cu-L](BAr₄)₂ according to one of the claims 1 to 7, **characterised by** the steps:
a) complexation of the ligand L with a Cu-(I)-compound [Cu(R₃)₄]X to the Cu-(I) complex [Cu-L]X in a polar aprotic solvent under inert gas atmosphere, wherein
- R₃ represents acetonitrile or no atom and
- in case R₃ represents acetonitrile, X is selected from hexafluorophosphate PF₆-, tetrafluoroborate BF₄-, perchlorate ClO₄-, hexafluoroantimonate SbF₆-, triflate SO₃CF₃⁻, tetraphenylborate BPh₄⁻ and tetrakis(3,5-trifluoromethyl)tetraphenylborate,
- as well as in case R₃ represents no atom, then X is selected from chloride Cl⁻, bromide Br⁻ and iodide I⁻.
b) replacement of the anion X of the Cu-(I) complex [Cu-L]X with tetraarylborate in a polar aprotic solvent under inert gas atmosphere,
c) bringing the [Cu-L]-tetraarylborate obtained after carrying out step b) into contact with an oxygen-containing atmosphere,
d) isolation and drying of the complex [L-Cu-O-O-Cu-L](BAr₄)₂. obtained after carrying out step c), wherein isolation and drying occur at low temperatures < -70 °C, and the drying occurs in the oxygen flow.

9. Method for the production of copper-(II)-oxygen adduct complexes of the general formula [L-Cu-O-O-Cu-L](BAr₄)₂ according to one of the claims 1 to 7, **characterised by** the steps:
a) conversion of the ligand L in a polar aprotic solvent under inert gas atmosphere with a salt [Cu(R₃)₄]X under inert gas atmosphere to the corresponding [Cu-(I)-L] complex, wherein
- R₃ represents acetonitrile or no atom and
- in case R₃ represents acetonitrile, the anion X is selected from hexafluorophosphate PF₆-, tetrafluoroborate BF₄-, perchlorate ClO₄-, hexafluoroantimonate SbF₆⁻, triflate SO₃CF₃⁻, tetraphenylborate BPh₄⁻ and tetrakis(3,5-trifluoromethyl)tetraphenylborate,
- in case R₃ represents no atom, then X is selected from chloride Cl⁻, bromide Br⁻ and iodide I⁻
b) conversion of the solution of the complex of [L-Cu-(I)]X obtained in step a) with a solution of the metal tetraarylborate under inert gas atmosphere,
c) isolating and drying the product [L-Cu-(I)]BAr₄ obtained in step b), wherein drying occurs under inert gas atmosphere,
d) exposing the solid isolated and dried in c) to an oxygen-containing atmosphere for the formation of the Cu-(II)-peroxo adduct complex [L-Cu-O-O-Cu-L](BAr₄)₂.

10. Method for the production of copper-(II)-oxygen adduct complexes of the general formula [L-Cu-O-O-Cu-L](BAr₄)₂ according to one of the claims 1 to 7, **wherein**:
- the ligand L is complexed in a polar aprotic solvent under inert gas atmosphere with a salt [Cu(R₃)₄]X to the corresponding [Cu-(I)-L] complex, wherein the compound [Cu(R₃)₄]X used for the complexation of the ligand L is [Cu(CH₃CN)₄]BAr₄, and
- either the product [L-Cu-(I)]BAr₄ is isolated and dried, wherein the drying occurs under inert gas atmosphere, and the isolated and dried solid is subsequently exposed to an oxygen-containing atmosphere for the formation of the Cu-(II)-peroxo adduct complex [L-Cu-O-O-Cu-L](BAr₄)₂,
- or the [Cu-L]-tetraarylborate is firstly brought into contact with an oxygen-containing atmosphere, and the complex [L-Cu-O-O-Cu-L](BAr₄)₂ obtained thereby is subsequently isolated and dried, wherein isolation and drying occur at low temperatures < -70 °C, and the drying occurs in the oxygen flow.

11. Method for the production of copper-(II)-oxygen adduct complexes of the general formula [L-Cu-O-O-Cu-L](BAr₄)₂ according to one of the claims 8 to 10, **wherein** the polar aprotic solvent is selected from acetone, acetonitrile and propionitrile.

12. Method for the production of copper-(II)-oxygen adduct complexes of the general formula [L-Cu-O-O-Cu-L](BAr₄)₂ according to one of the claims 8 to 11, **wherein** the oxygen-containing atmosphere used in step c) is selected from oxygen gas, air or an oxygen-air mixture.

13. Use of copper-(II)-oxygen adduct complexes according to one of the claims 1 to 7 as oxidation catalysts.

14. Use of copper-(II)-oxygen adduct complexes according to one of the claims 1 to 7 as a catalyst for the oxidation of benzene to phenol, methane to methanol, for the oxidation of hydrogen, aromatic and aliphatic, saturated and unsaturated hydrocarbons.

15. Use of copper-(II)-oxygen adduct complexes according to one of the claims 1 to 7 as a catalyst for the oxidation of benzene to phenol.

## Revendications

1. Complexes adduits cuivre-(II)-oxygène de la formule générale 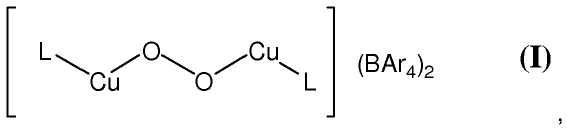 où
le BAr₄ représente un anion tétraarylborate choisi parmi le tétraphénylborate et le tétrakis (3,5-trifluorométhyl) phénylborate
et
L représente un ligand tripodal tétradenté, où
a) il s'agit pour chacun des quatre domaines de liaison du ligand tripodal tétradenté d'un atome d'azote, et
b) trois ligands podaux azotés sont liés à l'atome d'azote central, et
c) il s'agit pour le ligand tripodal tétradenté d'un ligand de la formule générale 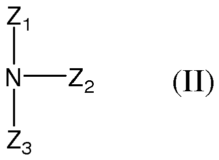 dans laquelle Z₁, Z₂ et Z₃ sont choisis indépendamment l'un de l'autre et chacun de ces trois ligands podaux azotés comprend indépendamment l'un de l'autre une amine aliphatique ou un composé hétéroaromatique azoté, et
d) un pont de un à quatre atomes de carbone se trouve entre l'atome d'azote central et l'atome d'azote de chacun des ligands podaux,
**caractérisée en ce que**,
• dans le cas où il s'agit pour le ligand podal d'un composé hétéroaromatique azoté, le pont de un à quatre atomes de carbone contient exactement un atome de carbone hybridé sp², où ledit atome de carbone hybridé sp² fait partie du composé aromatique hétérocyclique et se trouve en position 2 à au moins un atome d'azote du cycle hétérocyclique, ou
• dans le cas où il s'agit pour le ligand podal d'une amine aliphatique, le pont de un à quatre atomes de carbone contient exclusivement des atomes de carbone aliphatiques hybridés sp³ et l'amine aliphatique est liée à un groupe alkylène de un à quatre atomes de carbone selon la formule 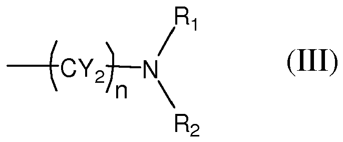
où
Y, n, R₁ et R₂ ont les significations suivantes et peuvent être choisis indépendamment l'un de l'autre pour chaque groupe Z₁, Z₂ und Z₃ :
Y = H ou F,
n = 1 , 2, 3, 4,
et R₁ et R₂ sont choisis indépendamment l'un de l'autre parmi
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CF(CF₃)₂, C(CF₃)₃,
- où, dans le cas où l'un des deux groupes R₁ ou R₂ représente -C(CH₃)₃ ou -C(CF₃), l'autre groupe R₁ ou R₂ est choisi parmi -H, -CH₃ et CF₃
- phényle, pentafluorophényle, méthylphényle, diméthylphényle, trifluorométhylphényle, (bis-trifluorométhyle) phényle.

2. Complexes adduits cuivre-(II)-oxygène selon la revendication 1, **caractérisés en ce qu'**il s'agit pour le ligand tripodal tétradenté d'un ligand de la formule générale 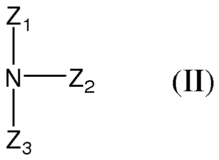 où Z₁, Z₂ et Z₃ sont choisis indépendamment l'un de l'autre parmi
- une amine aliphatique qui est liée à un groupe alkylène de un à quatre atomes de carbone selon la formule 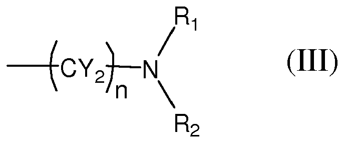
- et un composé hétéroaromatique azoté, lequel est lié en position 2 à au moins un de ses atomes d'azote à un groupe alkylène de zéro à trois atomes de carbone selon 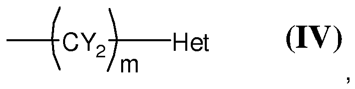 de telle sorte que l'atome de carbone hybridé sp² aromatique, qui se trouve en position 2 à au moins un atome d'azote du composé hétéroaromatique, forme conjointement avec le groupe alkylène -(CY₂)ₘ- un pont de un à quatre atomes de carbone entre l'atome d'azote central du ligand L et au moins un atome d'azote du composé hétéroaromatique,
où
Y, n, m, R₁, R₂ et Het ont les significations suivantes et peuvent être choisis indépendamment l'un de l'autre pour chaque groupe Z₁, Z₂ et Z₃ :
Y = H ou F,
n = 1 , 2, 3, 4,
m = 0, 1, 2, 3,
et R1 et R2 sont choisis chacun indépendamment l'un de l'autre parmi
- -H, -CH₃, -CH₂CH₃, -CH₂CH₂CH₃, -CH(CH₃)₂, C(CH₃)₃,
- -CF₃, -CF₂CF₃, -CF₂CF₂CF₃, -CF(CF₃)₂, C(CF₃)₃,
- où, dans le cas où l'un des deux groupes R₁ ou R₂ représente -C(CH₃)₃ ou -C(CF₃), l'autre groupe R₁ ou R₂ est choisi parmi -H,-CH₃ et CF₃
- phényle, pentafluorophényle, méthylphényle, diméthylphényle, trifluorométhylphényle, (bis-trifluorométhyle) phényle
et Het est un composé hétéroaromatique azoté choisi parmi

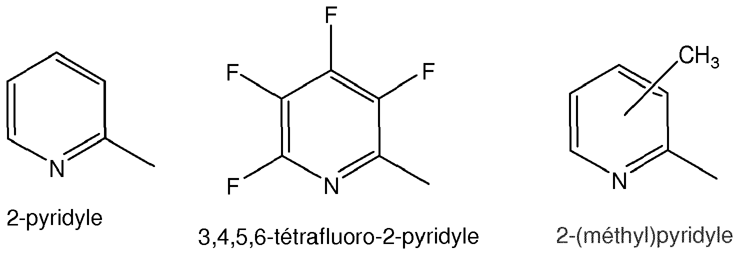

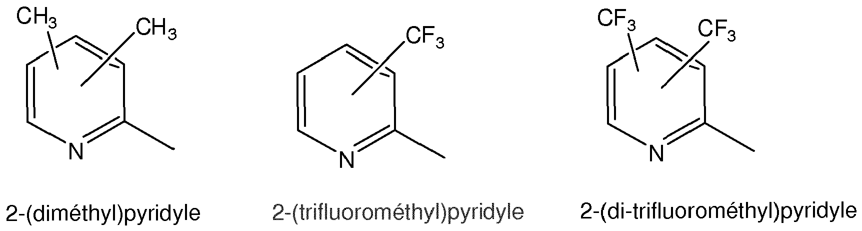

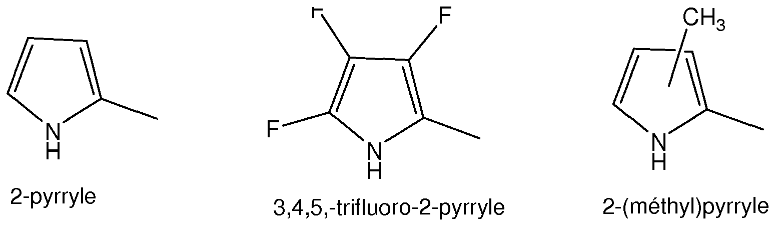

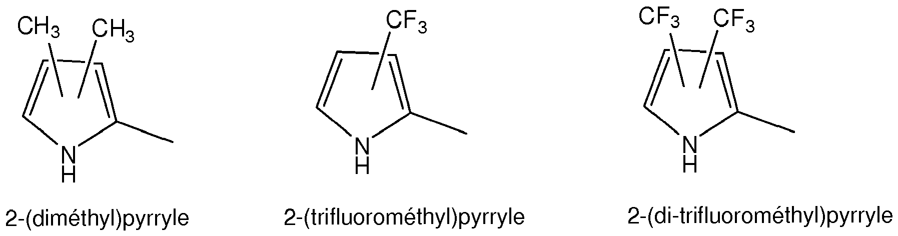

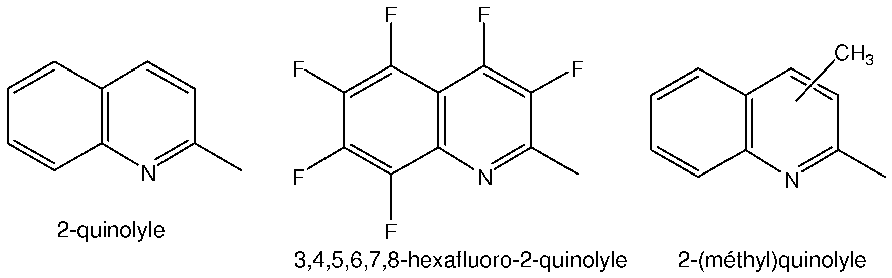

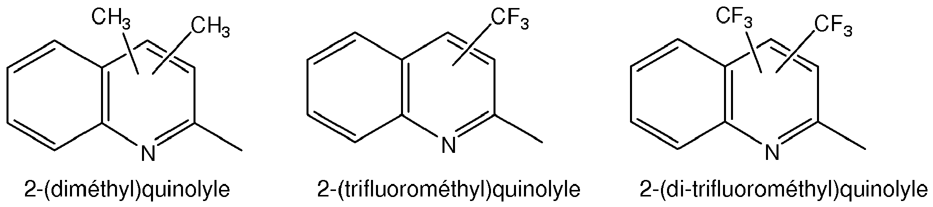

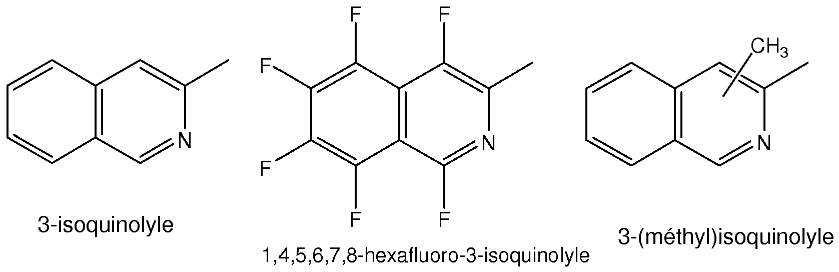

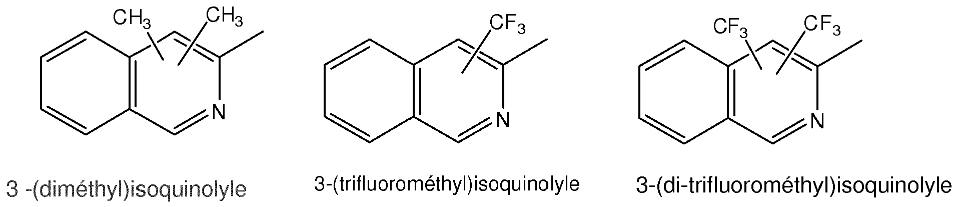

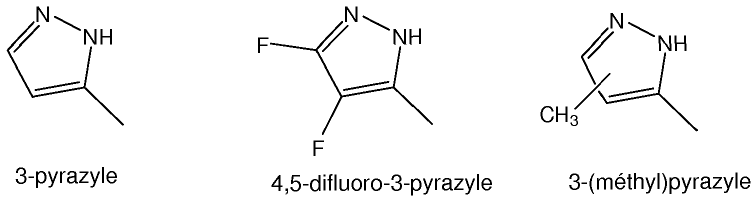

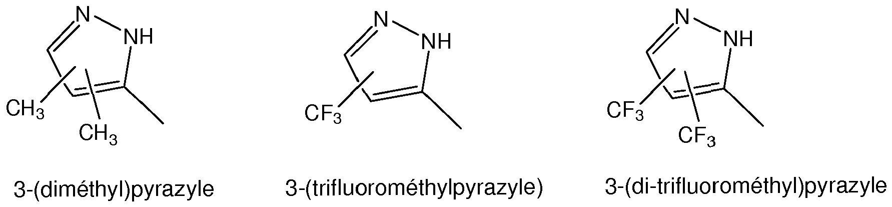

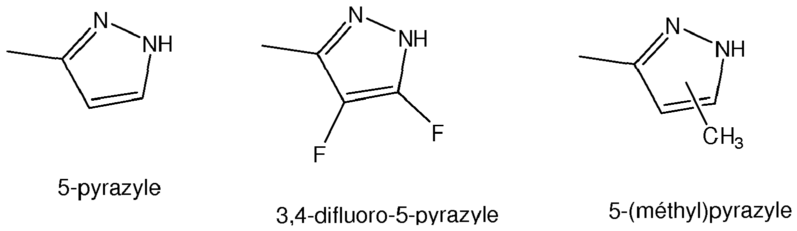

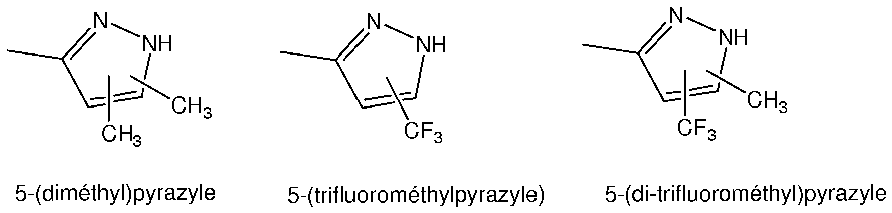

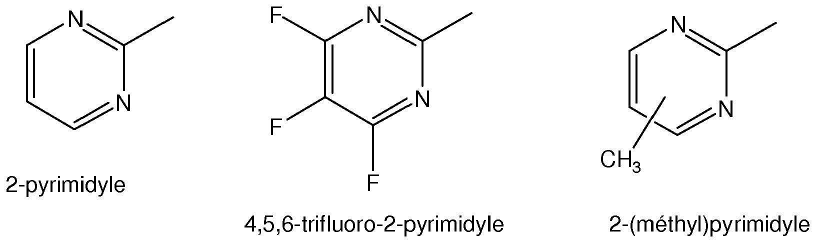

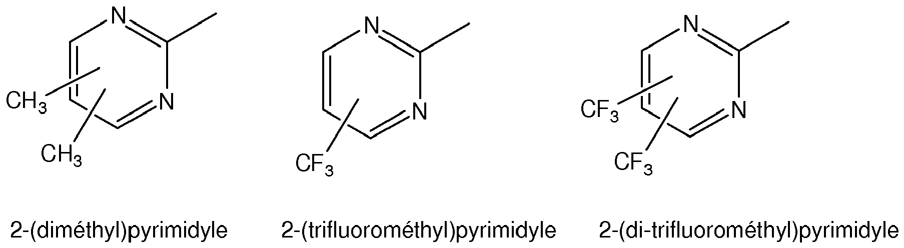

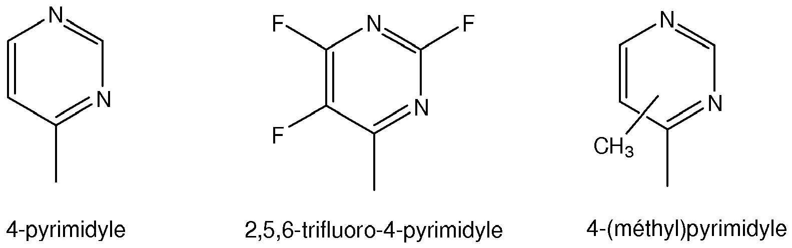

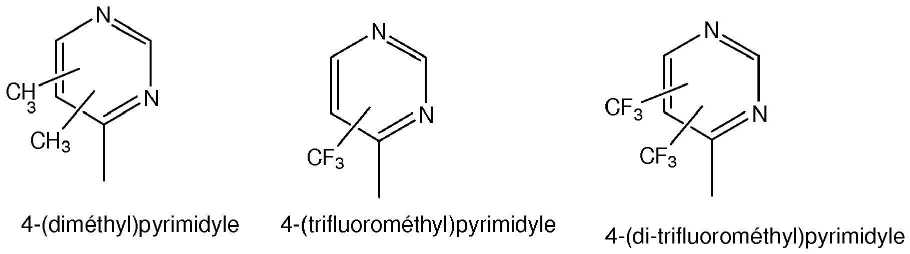

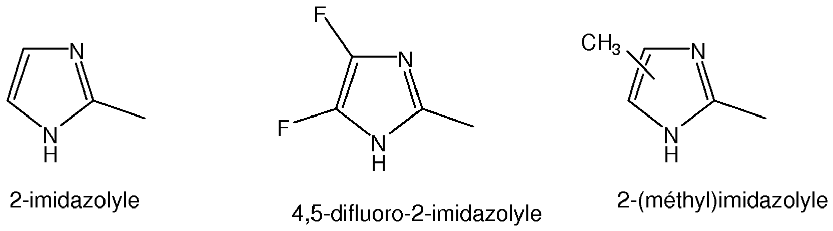

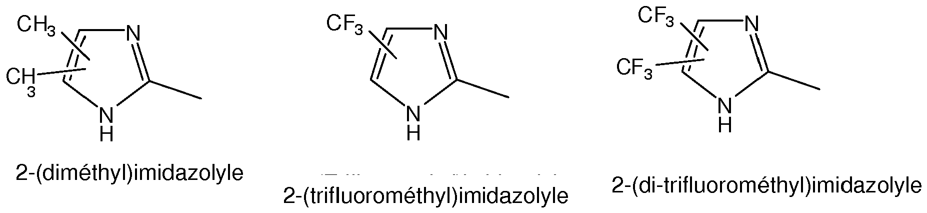

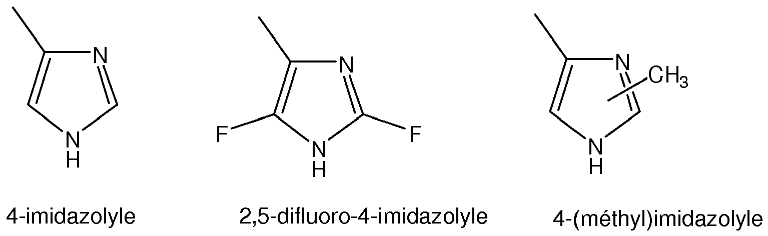

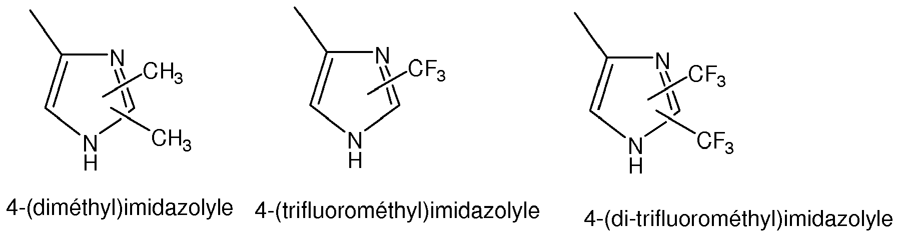

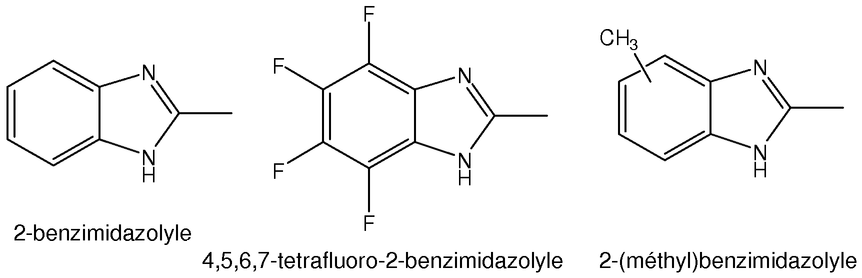

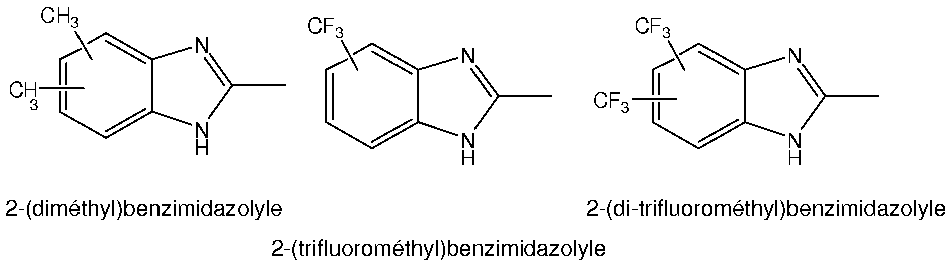

3. Complexes adduits cuivre-(II)-oxygène selon l'une des revendications 1 ou 2 où Z₁, Z₂ et Z₃ sont choisis indépendamment l'un de l'autre 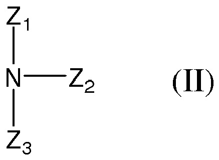 dans le ligand tripodal tétradenté L parmi
- une amine aliphatique qui est liée à un groupe alkylène de un à quatre atomes de carbone selon la formule 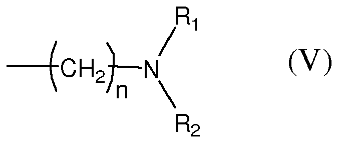 et
- un composé hétéroaromatique azoté, lequel est lié en position 2 à au moins l'un de ses atomes d'azote à un groupe alkylène de zéro à trois atomes de carbone selon la formule 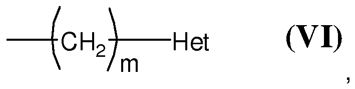
où n, m, R₁, R₂ et Het peuvent être choisis indépendamment l'un de l'autre pour chaque groupe Z₁, Z₂ et Z₃ et ont les significations indiquées dans la revendication 2, et où, dans le cas où l'un des deux groupes R₁ ou R₂ représente -C(CH₃)₃ ou -C(CF₃)₃, l'autre groupe R₁ ou R₂ est choisi parmi -H, -CH₃ et CF₃.

4. Complexes adduits cuivre-(II)-oxygène selon l'une des revendications 1 à 3 où Z₁, Z₂ et Z₃ sont choisis indépendamment l'un de l'autre 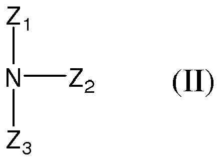 dans le ligand tripodal tétradenté L parmi
- une amine aliphatique qui est liée à un groupe alkylène de deux atomes de carbone selon la formule 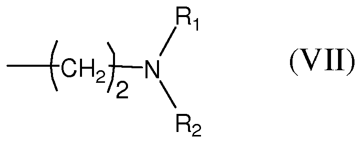 et
- un composé hétéroaromatique azoté, lequel est lié en position 2 à au moins l'un de ses atomes d'azote à un groupe méthylène selon la formule
-CH₂-Het **(VIII),**
où R₁, R₂ et Het peuvent être choisis indépendamment l'un de l'autre pour chaque groupe Z₁, Z₂ et Z₃ et ont les significations indiquées dans la revendication 2, et où, dans le cas où l'un des deux groupes R₁ ou R₂ représente -C(CH₃)₃ ou -C(CF₃)₃, l'autre groupe R₁ ou R₂ est choisi parmi -H, -CH₃ et CF₃.

5. Complexes adduits cuivre-(II)-oxygène selon l'une des revendications 1 à 4 où Z₁, Z₂ et Z₃ sont choisis indépendamment l'un de l'autre 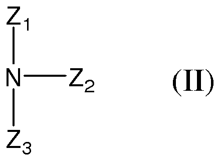 dans le ligand tripodal tétradenté L parmi
- une amine aliphatique qui est liée à un groupe alkylène de deux atomes de carbone selon la formule 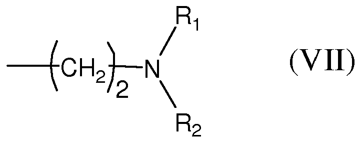 et
- un composé hétéroaromatique azoté, lequel est lié en position 2 à au moins un de ses atomes d'azote à un groupe méthylène selon la formule
-CH₂-Het **(VIII)**,
où R₁, R₂ sont choisis parmi
-H, -CH₃, -CH₂CH₃, -CH₂CH₂CH₃, -CH(CH₃)₂, C(CH₃)₃,
où, pour le cas où l'un des deux groupes R₁ ou R₂ est -C(CH₃)₃, l'autre groupe R₁ ou R₂ est choisi parmi -H et -CH₃,
et
Het est choisi parmi
2-pyridyle, 2-pyrryle, 2-quinolyle, 3-isoquinolyle, 3-pyrazyle, 5-pyrazyle, 2-pyrimidyle, 4-pyrimidyle, 2-imidazolyle, 4-imidazolyle, 2-benzimidazolyle.

6. Complexes adduits cuivre-(II)-oxygène selon l'une des revendications 1 à 5, **caractérisés en ce que** le ligand tripodal tétradenté L est choisi parmi le groupe tris-(2-diméthylaminoéthyle)-amine, bis-[2-diméthylaminoéthyle-(2-pyridylméthyle)]-amine, [(2-diméthylaminoéthyle)-bis-(2-pyridylméthyle)]-amine, tris-[(2-pyridyle)-méthyle]-amine.

7. Complexes adduits cuivre-(II)-oxygène selon l'une des revendications 1 à 6 **caractérisés en ce que**, BAr₄ représente le tetraphenylborate.

8. Procédé pour la production de complexes adduits cuivre-(II)-oxygène de la formule générale [L-Cu-O-O-Cu-L] (BAr₄)₂ selon l'une des revendications 1 à 7, **caractérisé par** les étapes :
a) formation du complexe du ligand L avec une liaison Cu-(I) [Cu(R₃)₄]X au complexe Cu-(I) [Cu-L]X dans un solvant polaire aprotique sous atmosphère de gaz protecteur, où
- R₃ représente un acétonitrile ou aucun atome et
- dans le cas où R₃ représente un acétonitrile, X est choisi parmi l'hexafluorophosphate PF₆⁻, le tétrafluoroborate BF₄⁻, le perchlorate ClO₄⁻, l'hexafluoroantimoniate SbF₆⁻, le triflate SO₃CF₃⁻, le tétraphénylborate BPh₄⁻, et le tétrakis(3,5-trifluorométhyle)tétraphénylborate,
- et dans le cas où R₃ ne représente aucun atome, X est choisi parmi le chlorure Cl⁻, le bromure Br⁻ et le iodure I⁻
b) échange de l'anion X du complexe Cu-(I) [Cu-L]X par le tétraarylborate dans un solvant polaire aprotique sous atmosphère de gaz protecteur,
c) mise en contact du [Cu-L]-tétraarylborate obtenu après avoir effectué l'étape b) dans un milieu oxygéné,
d) isolation et séchage du complexe [L-Cu-O-O-Cu-L](BAr₄)₂. obtenu après avoir effectué l'étape c), où l'isolation et le séchage s'effectuent à des températures basses <-70°C et le séchage s'effectue dans un courant d'oxygène.

9. Procédé pour la production de complexes adduits cuivre-(II)-oxygène de la formule générale [L-Cu-O-O-Cu-L](BAr₄)₂ selon l'une des revendications 1 à 7, **caractérisé par** les étapes :
a) réaction du ligand L dans un solvant polaire aprotique sous atmosphère de gaz protecteur avec un sel [Cu(R₃)₄]X sous atmosphère de gaz protecteur au complexe [Cu (I)-L] correspondant, où
- R₃ représente un acétonitrile ou aucun atome et
- dans le cas où R₃ est un acétonitrile, l'anion X est choisi parmi l'hexafluorophosphate PF6⁻, le tétrafluoroborate BF₄⁻, le perchlorate ClO₄⁻, l'hexafluoroantimoniate SbF₆⁻, le triflate SO₃CF₃⁻, le tétraphénylborate BPh₄⁻, et le tétrakis(3,5-trifluorométhyle)tétraphénylborate,
- et dans le cas où R₃ ne représente aucun atome, X est choisi parmi le chlorure Cl⁻, le bromure Br⁻ et le iodure I⁻
b) réaction de la solution obtenue à l'étape a) du complexe de [L-Cu (I)] X avec une solution de métal-tétraarylborate sous atmosphère de gaz protecteur,
c) isoler et sécher le produit [L-Cu-(I)]BAr₄ obtenu à l'étape b) où le séchage est effectué sous atmosphère de gaz protecteur,
d) exposer le solide isolé et séché en c) à un milieu oxygéné pour former le complexe adduit peroxo Cu-(II) [L-Cu-O-O-Cu-L](BAr₄)₂.

10. Procédé pour la production de complexes adduits cuivre-(II)-oxygène de la formule générale [L-Cu-O-O-Cu-L] (BAr₄)₂ selon l'une des revendications 1 à 7, **caractérisé en ce que**
- le ligand L est complexé dans un solvant polaire aprotique sous atmosphère de gaz protecteur avec un sel [Cu(R₃)₄]X au complexe correspondant [Cu-(I)-L], où le composé [Cu(R₃)₄]X utilisé pour complexer le ligand L est [Cu(CH₃CN)₄]BAr₄, et
- soit le produit [L-Cu-(I)]BAr₄ est isolé et séché, où le séchage est effectué sous atmosphère de gaz protecteur, et le solide isolé et séché est ensuite exposé à un milieu oxygéné pour former le complexe adduit peroxo Cu-(II) [L-Cu-O-O-CuL](BAr₄)₂,
- ou le [Cu-L]-tétraarylborate est d'abord mis en contact avec un milieu oxygéné, et le complexe [L-Cu-O-O-Cu-L](BAr₄)₂ ainsi obtenu est isolé et séché, où l'isolation et le séchage s'effectuent à des températures basses <-70 °C et le séchage s'effectue dans un courant d'oxygène.

11. Procédé pour la production de complexes adduits cuivre-(II)-oxygène de la formule générale [L-Cu-O-O-Cu-L] (BAr₄)₂ selon l'une des revendications 8 à 10, **caractérisé en ce que** le solvant polaire aprotique est choisi parmi l'acétone, l'acétonitrile et le propionitrile.

12. Procédé pour la production de complexes adduits cuivre-(II)-oxygène de la formule générale [L-Cu-O-O-Cu-L] (BAr₄)₂ selon l'une des revendications 8 à 11, **caractérisé en ce que** le milieu oxygéné utilisé à l'étape c) est choisi parmi de l'oxygène gazeux, de l'air ou un mélange d'oxygène et d'air.

13. Utilisation des complexes adduits cuivre-(II)-oxygène selon l'une des revendications 1 à 7 comme catalyseurs d'oxydation.

14. Utilisation des complexes adduits cuivre-(II)-oxygène selon l'une des revendications 1 à 7 comme catalyseurs pour l'oxydation du benzène en phénol, du méthane en méthanol, pour l'oxydation de l'hydrogène, d'hydrocarbures aromatiques et aliphatiques, saturés et insaturés.

15. Utilisation des complexes adduits cuivre-(II)-oxygène selon l'une des revendications 1 à 7 comme catalyseurs pour l'oxydation du benzène en phénol.
